# EUROPEAN PATENT APPLICATION

(11) **EP 3 503 137 A1**
(43) Date of publication of application: **26.06.2019**
(21) Application number: 17210317.8
(22) Date of filing: 22.12.2017
(51) Int. Cl.: H01F 38/14, F03B 13/00, H02J 50/10

(54) **INDUCTIVE POWER CONNECTOR**

(71) Applicant: Openhydro IP Limited, Dublin 2 (IE)
(72) Inventor: SPOONER, Edward, Bishop Auckland Durham DL13 1SL (GB); CAWTHORNE, Simon, County Louth Carlingford (IE); GAVIGAN, Declan, Ardara, County Donegal (IE); DUNNE, Paul, 9 Dublin (IE)
(74) Representative: FRKelly

(57) **Abstract**

An inductive power connector comprising first and second connector parts that are removably connectable. Each connector part comprises one or more electrical windings provided around a magnetic core. The first connector part is insertable into the second connector part in an axial direction so that its windings couple with the windings of the second connector part by electromagnetic induction. Where more than one winding is provided on either connector part, the windings are longitudinally spaced apart, coaxial and separated by part of the magnetic core.

## Description

### Field of the Invention

The present invention relates to electrical power connectors, especially electromagnetically inductive power connectors, and to electrical systems employing electrical power connectors, especially submerged electrical systems.

### Background to the Invention

Hydroelectric turbine generators are recognised as a means for effectively harnessing a clean and renewable energy source. In particular, tidal current turbines, which are installed underwater, exploit natural currents caused by tides or by river flows near estuaries, to generate electrical power for provision to utility grids, which are generally provided on shore.

Accessing turbine generator systems that are installed underwater can be difficult and hazardous. Moreover, the turbine generator (and typically associated electrical equipment such as a frequency convertor, rectifier and transformer as applicable) is typically fixed to a gravity base structure (GBS), the combined weight of which can be in the order of hundreds of tonnes. Some components of the system can be provided in a housing that is separate to that of the turbine generator, but which is still fixed to the GBS. In any event, the electrical components of the system tend to be permanently electrically connected to each other, whether they are in the same or separate housings.

The, or each, electrical power output of the turbine generator system is conventionally connected to one or more power cable for delivering the power to an on-shore installation. Such electrical (and physical) underwater connections are typically made using dry-mate or wet-mate electrical connectors. Dry-mate and wet-mate connectors comprise electrical contacts and can be expensive and complicated to use. In some cases, such connectors must be connected and disconnected in dry conditions, e.g. in a boat.

It can be understood from the foregoing that the size and weight of the underwater installation, and the nature of the electrical connectors, can make the installation and maintenance of tidal turbine generator systems complicated and cumbersome. For example, for the purpose of maintenance, high-voltage dry-mate connectors must be uncoupled and the whole installation, including the GBS, must be recovered from its location on the sea bed and taken to an on-shore facility.

It would be desirable to mitigate some or all of the problems outlined above.

### Summary of the Invention

A first aspect of the invention provides an electrical power connector comprising: a first connector part comprising a magnetic core and at least one first electrical winding provided on the magnetic core; a second connector part comprising a magnetic core, at least one second electrical winding, and a socket for receiving said first connector part, wherein said first connector part is removably insertable in said second connector part, and wherein, in a connected state in which said first connector part is inserted in said second connector part, said magnetic core and said at least one first electrical winding are located within said socket and at least partly within, preferably coaxially, said at least one second electrical winding to allow electromagnetic inductive coupling between said at least one first electrical winding and said at least one second electrical winding in use.

Advantageously, said first and second parts are movable with respect to each other into and out of said connected state, along a central/longitudinal axis of said socket.

From another aspect the invention provides an inductive power connector comprising: a first connector part comprising a magnetic core, and at least one first electrical winding wound around a longitudinal axis of the magnetic core; a second connector part comprising a magnetic core, at least one second electrical winding, the second connector part being shaped and dimensioned to provide a socket for receiving said first connector part, said at least one second electrical winding being wound around a longitudinal axis of said socket; wherein said first connector part is removably insertable in said second connector part, and wherein, in a connected state in which said first connector part is inserted in said second connector part, said magnetic core and said at least one first electrical winding of said first connector part are located in said socket and within, preferably coaxially, said at least one second electrical winding to allow inductive electromagnetic coupling between said at least one first electrical winding and said at least one second electrical winding, and wherein, in said connected state, said longitudinal axes are substantially coincident.

From another aspect the invention provides an inductive power connector comprising: a first connector part comprising a magnetic core and at least one first electrical winding wound around a longitudinal axis of the magnetic core; a second connector part comprising a magnetic core and at least one second electrical winding, the second connector part being shaped and dimensioned to provide a socket for receiving said first connector part, said at least one second electrical winding being wound around a longitudinal axis of the socket; wherein said first connector part is removably insertable into said second connector part, and wherein, in a connected state in which said first connector part is inserted in said second connector part, said magnetic core and said at least one first electrical winding of said first connector part are located in said socket and within, preferably coaxially, said at least one second electrical winding to allow inductive electromagnetic coupling between said at least one first electrical winding and said at least one second electrical winding, and wherein at least one of said first and second connector parts includes a cover that is operable into and out of an active state.

From another aspect the invention provides a turbine generator system comprising: a turbine generator having an AC electrical power output; a power converter for converting AC electrical power produced by said turbine generator into converted AC electrical power; a power transmission system and/or a cable network for transmitting said converted AC electrical power to a receiving system, wherein at least one of said turbine generator, said power converter, said transmission system and said cable network is releasably connectable to at least one other of said turbine generator, said power converter, said transmission system and said cable network of said power converter and said power transmission system by at least one inductive power connector, wherein said at least one inductive power connector comprises: a first part comprising a magnetic core, and at least one first electrical winding provided around the core; a second part comprising a socket and at least one second electrical winding provided around said socket, the socket being shaped and dimensioned to receive said magnetic core and said at least one first electrical winding to allow inductive electromagnetic coupling between said at least one first electrical winding and said at least one second electrical winding, and wherein said first part is removably insertable in said second part.

In preferred embodiments, said at least one first winding comprises two or more first windings, the first windings being mutually spaced apart along the longitudinal axis of the magnetic core, and preferably being coaxial. Each first winding is advantageously separated from the, or each, adjacent first winding by part of said magnetic core.

Connectors embodying the invention may be configured for connecting a multi-phase electrical supply, wherein said at least one first winding comprises a respective first winding for each phase of the electrical supply.

In preferred embodiments, said at least one second winding comprises two or more second windings, each second winding being spaced apart along the longitudinal axial of the socket, and preferably being coaxial. The connector may be configured for connecting a multi-phase electrical supply, wherein said at least one second winding comprises a respective second winding for each phase of the electrical supply.

In preferred embodiments, said second connector part includes an annular magnetic core having a longitudinal axis that is substantially coincident with the longitudinal axis of the socket, said at least one second electrical winding being provided on said annular magnetic core, and wherein, in said connected state, said magnetic core and said at least one first electrical winding of said first connector part are located within the annular magnetic core of the second connector part.

Advantageously, where more than one second winding is provided, each second winding is separated from the, or each, adjacent second winding by part of said annular magnetic core.

In the connected state, said at least one first electrical winding is typically substantially in register with said at least one second electrical winding in the longitudinal (or axial) direction.

In some embodiments, there is a plurality of first electrical windings and a plurality of second electrical windings, each of said first windings being substantially in register with a respective one of the second windings.

In typical embodiments, there is an equal number of first and second electrical windings.

Optionally, said at least one first winding and said at least one second winding are configured to cause said connector to act as a power transformer. The respective number of turns of said at least one first winding and of said at least one second winding may be configured to cause said connector to act as a power transformer. Optionally, each of said first windings has the same number of turns, and each of said second windings has the same number of turns but different than the number of turns of said first windings.

Said at least one first winding is typically located around the outside of the magnetic core of the first connector part. Said at least one first winding may be located in a respective recessed seat provided in (or around) the outside of said magnetic core, the, or each recessed seat accommodating one or more first winding.

Typically, said at least one second winding is located around the inside of said annular magnetic core. Said at least one second winding may be located in a respective recessed seat provided in the inside of said annular magnetic core, the, or each recessed seat accommodating one or more second winding.

Preferably, in the connected state, the magnetic core of said first connector part and the annular magnetic core of said second connector part together form a composite magnetic core around said at least one first and second windings. The first connector part and the second connector part may have an equal number of recessed seats for receiving first and second windings respectively, and wherein in the connected state the, or each, recessed seat of the first connector part is longitudinally (or axially) aligned with a corresponding recessed seat of the second connector part.

In preferred embodiments, the magnetic core of said first connector part includes first and second longitudinally (or axially) spaced apart end portions between which said at least one first winding is located, and the magnetic core of said second connector part includes first and second longitudinally spaced apart end portions between which said at least one second winding is located, and wherein said end portions of said first connector part are aligned with the end portions of the second connector part in the longitudinal direction when the connector is in the connected state.

Typically, the magnetic core of said first connector part includes at least one intermediate portion located between adjacent first windings, and the magnetic core of said second connector part includes at least one intermediate portion located between adjacent second windings, and wherein the or each intermediate portion of said first connector part is aligned with a respective intermediate portions of the second connector part in the longitudinal direction when the connector is in the connected state.

The magnetic cores of said first and second connector parts may comprise a plurality of longitudinally spaced apart rings of magnetic material between which the respective first and second windings are located. In the connected state, the rings of the first connector part are preferably aligned with the rings of the second connector part in the longitudinal (or axial) direction.

The magnetic core of said first connector part may comprise a plurality of longitudinally spaced apart and transversely disposed rings of magnetic material, located around a longitudinally disposed central core portion. The central core portion may comprise at least one longitudinally disposed post of magnetic material. In some embodiments, the central core portion comprises a plurality of posts spaced apart, preferably symmetrically, about the longitudinal axis of the magnetic core.

Optionally the magnetic core of said second connector part comprises a plurality of longitudinally spaced apart and transversely disposed rings of magnetic material, located within a longitudinally disposed outer core portion. Said outer core portion may comprise at least one longitudinally disposed post of magnetic material. Said outer core portion may comprise a plurality of posts spaced apart, preferably symmetrically, about the longitudinal axis of the magnetic core.

Optionally, said rings comprise a stack of electrical ring shaped laminations disposed in the transverse direction. The ring shaped laminations may include at least one radially disposed slit. The stack of ring laminations may include at least one radially disposed flux shunt.

Optionally, said posts comprise a stack of electrical laminations disposed in the longitudinal direction.

Optionally said first and second connector parts are rotatable relative to one another about a common longitudinal axis in the connected state. One or more sets of bearings may be provided on the first and second connector parts to facilitate the relative rotation between the first and second connector parts.

Advantageously, a leading end of said first connector part is provided with a bevelled surface.

Advantageously, said second connector part is provided with a bevelled surface around a mouth of said socket.

Optionally, the connector includes an inductive coupler for transmitting control and/or data signals when in the connected state, said inductive coupler conveniently comprising a first winding on said first connector part and a corresponding second winding on said second connector part.

Two or more spacing elements may be spaced apart around the magnetic core of the first connector part, at least one of the spacing elements being resiliently deformable in the transverse direction.

In use, one or other of said first and second connector parts may be connected to a balanced three-phase voltage supply and includes a respective first or second winding for each phase, wherein said windings are longitudinally spaced apart, the outer two windings being connected to their respective phase in the same sense, the middle winding being connected to its respective phase in the opposite sense.

In typical embodiments, said cover, when present, is movable into the active state in response to removal of the first connector part from the second connector part.

In the active state the cover is preferably longitudinally (or axially) aligned with said at least one first winding or said at least one second winding respectively.

Conveniently, the cover is configured to be moved out of said active state in response to insertion of said first connector part into said second connector part.

In some embodiments, the cover has a buoyancy that causes it to move into the active state when said first and second connector parts are not in the connected state.

Alternatively, the cover may be weighted to cause it to move into said active state under the influence of gravity when said first and second connector parts are not in the connected state.

Optionally the cover is resiliently biased to move into said active state.

In some embodiments, the cover is provided in the socket and is movable longitudinally (or axially) in the socket. Advantageously, the cover comprises a body that substantially fills the socket in the transverse direction.

The cover may be configured to engage with said first connector part and to be moved out of said active state by said first connector part when said first connector part is inserted into said socket.

In some embodiments, the cover is annular, is located around said first connector part and is movable longitudinally (or axially) with respect to said first connector part. The cover may be configured to engage with said second connector part and to be moved out of said active state by said second connector part when said first connector part is inserted into said socket.

In preferred embodiments, the cover comprises a magnetic shunt configured to, in the active state, form part of a magnetic circuit around one or more of the respective first or second windings of the respective connector part. The cover may comprise one or more magnetic component that is shaped and dimensioned to serve as a magnetic shunt when in the active state.

In some embodiments, the magnetic component is annular and is dimensioned in the transverse direction to substantially match the width of the socket so that it is located adjacent one or more second winding in the active state.

In some embodiments, the magnetic component is annular and is dimensioned in the transverse direction to fit around the magnetic core of the first connector component such that it is located adjacent one or more first winding in the active state.

Preferably, said magnetic component is dimensioned to extend alongside, preferably fully, at least one of said first or second windings.

Further advantageous aspects of the invention will be apparent to those ordinarily skilled in the art upon review of the following description of specific embodiments and with reference to the accompanying drawings.

### Brief Description of the Drawings

Embodiments of the invention are now described by way of example and with reference to the accompanying drawings in which like numerals are used to denote like parts and in which:
Figure 1 is a schematic view of a hydroelectric generator system;
Figure 2 is a schematic view of a hydroelectric generator system embodying one aspect of the invention;
Figure 3 is a sectioned side view of a first embodiment of an electrical power connector embodying another aspect of the invention;
Figure 4 is a section side view of first and second electrical windings an a composite magnetic core, included in the power connector of Figure 3;
Figure 5 is a sectioned side view of a second embodiment of an electrical connector embodying the invention;
Figure 6A is a sectioned side view of a first part of the connector of Figure 5, with additional positioning elements;
Figure 6B is a bottom end view of the first connector part of Figure 6A;
Figure 7A is a sectioned side view of a first connector part of a third embodiment of the electrical connector;
Figure 7B is a sectioned side view of a first connector part of a fourth embodiment of the electrical connector;
Figure 8 is a sectioned side view of a fifth embodiment of an electrical connector embodying the invention;
Figure 9A is a sectioned side view of a sixth embodiment of the electrical power connector shown in a non-connected state;
Figure 9B is a sectioned side view of the power connector of Figure 9A shown in an intermediate state; and
Figure 9C is a sectioned side view of the power connector of Figures 9A and 9B shown in a connected state;
Figure 10A is a sectioned side view of a seventh embodiment of the electrical power connector shown in a non-connected state;
Figure 10B is a sectioned side view of the power connector of Figure 10A shown in an intermediate state; and
Figure 10C is a sectioned side view of the power connector of Figures 10A and 10B shown in a connected state;
Figure 11 is a sectioned side view of a eighth embodiment of the electrical power connector shown in a non-connected state;
Figure 12 is a sectioned side view of an ninth embodiment of the electrical power connector shown in a non-connected state;
Figure 13 is a sectioned side view of a preferred cable winding configuration suitable for use with embodiments of the invention;
Figure 14 is a sectioned side view of first and second electrical windings an a composite magnetic core suitable for use with embodiments of the invention;
Figure 15A is a plan view of a ring lamination suitable for use in the magnetic core of embodiments of the invention;
Figure 15B is a plan view of another ring lamination suitable for use in the magnetic core of embodiments of the invention;
Figure 16A is an isometric view of the magnetic core and windings of the first connector part suitable for use in preferred embodiments of the connector;
Figure 16B is a sectioned side view of the magnetic core and windings of the first connector part of Figure 16A;
Figure 16C is a plan view of a ring lamination of the magnetic core of Figure 16;
Figure 16D is a cross-sectional view of the magnetic core and windings of Figure 16;
Figure 17A is an isometric view of the magnetic core and windings of the second connector part suitable for use in preferred embodiments of the connector;
Figure 17B is a sectioned side view of the magnetic core and windings of the second connector part of Figure 17A;
Figure 17C is a plan view of a ring lamination of the magnetic core of Figure 17; and
Figure 17D is a cross-sectional view of the magnetic core and windings of Figure 17.

### Detailed Description of the Drawings

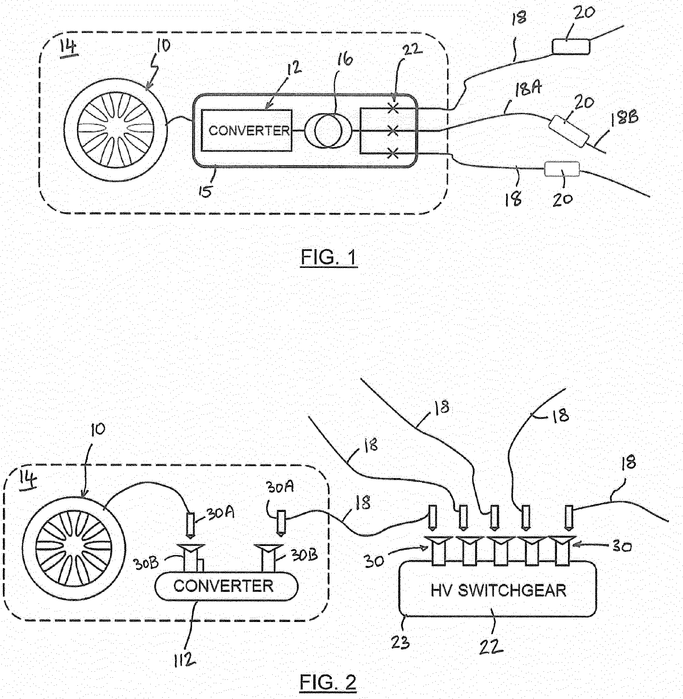

Figure 1 shows a block diagram of an electrical generator system comprising a turbine generator 10. The turbine generator 10 comprises a turbine coupled to an electrical generator (not shown individually). The turbine is driven by a fluid, typically air or water, the specific construction of the turbine typically depending at least in part on the driving fluid. The most common types of turbine generators 10 are driven by wind or by tidal streams / currents. In preferred embodiments, the turbine is a hydroelectric turbine, especially a tidal-current turbine.

The generator converts mechanical energy generated by the turbine to electrical energy. In preferred embodiments, the generator is a directly coupled permanent-magnet generator and provides a three-phase AC power output, having a voltage and frequency that is proportional to a rotational speed of the turbine. However, it will be appreciated that arrangements with any suitable number (one or more) of phases may be employed. In some designs of generators, it is possible to separate coils of the windings into groups to provide two or more outputs that are electrically isolated.

The AC electrical output (or each AC electrical output, as the case may be) of the generator is provided to AC terminals (not shown) of a power converter 12 for converting the AC power produced by the turbine generator 10 (single phase, three-phase or multi-phase as applicable) into a form that is compatible with a transmission system for transmitting electrical power to a receiving station that is typically located on-shore. The configuration of the AC transmission system may vary from application to application. A typical transmission system includes any combination of transformer(s), switch(es) and power cable(s), as suits the application, any of which may be subsea, underground or overhead as required.

Most turbines are operable with a variable rotor speed and so variations in wind speed or tidal flow rate can cause a corresponding variation in the frequency of the generator output signal. In preferred embodiments therefore, the converter 12 comprises a frequency converter, or AC to AC converter, that converts the AC power produced by the turbine generator into AC power compatible with the transmission system.

The frequency converter 12 stablizes the frequency of the output signal to compsensate for wind or tidal flow variations. The frequency converter 12 may adapt the frequency of the generator output signal to suit the frequency requirements of the receiving station and/or an end system such as the grid.

The transmission system includes a transformer 16 to increase the voltage of the power delivered by the converter 12 to a level compatible with the next part of the transmission system. The transmission system may include, or otherwise be connected to, a cable network comprising one or more electrical power cables 18 for transmitting the converted and transformed output power from one or more turbine generator 10 to the receiving station. Each cable 18 is typically a three-phase cable.. In a conventional set up, the, or each, cable 18 comprises a local section 18A connected to a remote section 18B by a respective electrical connector 20 such as a dry-mate connector.

The transmission system may include switchgear 22 may be provided for connecting the transformer 16 to the power cable(s) 18.

In the arrangement of Figure 1, the turbine generator 10, converter 12, transformer 16 and switchgear 22 are all mounted on a common gravity base structure (GBS) 14. The converter 12, transformer 16 and switchgear 22 may be included in the same housing 15. Conventionally, the turbine generator 10, converter 12, transformer 16 and switchgear 22 are electrically hardwired to one another as applicable. In order to perform maintenance, the connectors 20 are disconnected and the turbine generator 10, converter 12, transformer 16, switchgear 22 and GBS 14 are recovered as a unit.

By way of example, the turbine generator 10 may produces output power at a variable voltage and frequency, for example 100-400V and 5-30Hz, and the converter 12 may change the voltage and frequency, for example to 400 or 690V at 50Hz. The transformer 16 may transform the voltage to a level suitable for the switches 22, e.g. 33kV in this example. The converter 12 may be rated at 2MW and the transformer 16 may be rated at 2MVA. The turbine generator system typically produces 3 phase power, and so the power cable(s) 18 carry three-phase AC current at a line-to-line voltage of 33kV in this example.

A transformer (not shown) may be provided at the receiving station to convert the power received via the power cable(s) 18 to a voltage suitable for connection to a grid or alternatively, to a voltage suitable for connection to a subsequent stage of power conversion that may be needed prior to grid connection.

Although only one turbine generator 10 is shown in Figure 1, typically multiple turbine generators are grouped together and their combined power outputs can be transmitted to shore. To this end, the turbine generator systems may be electrically connected together, for example in parallel by a respective short power cable, or other cable(s), which may be said to be part of the cable network to which the turbine generator(s) are connected. The array may be configured to feed one or more main transmission power cable(s) 18 to transmit power collected from the group (or array) of turbine generator systems to the receiving station (not shown) provided near to or on shore.

Figure 2 shows an AC electrical generator system embodying one aspect of the invention. The system of Figure 2 may be the same or similar to the system of Figure 1 unless otherwise indicated, like numerals being used to denote like parts and the same or similar description applying as would be apparent to a skilled person. The system of Figure 2 comprises a turbine generator 10, a power converter 112 (which is typically a frequency converter) and a transmission system, which in this example includes switchgear 22. The transmission system may include, or be connected to, a cable network comprising one or more power cables 18 for transmitting the converted and transformed output power from one or more turbine generators 10 to the receiving station and/or for interconnecting two or more turbine generators that form an array or group of turbine generators.

The turbine generator 10 and the converter 112 may be provided in the same housing (not shown) or in separate housings. The turbine generator 10 and the converter 112 may be mounted on the same GBS 14, or on a respective GBS. Preferably the turbine generator 10 and/or the converter 112 are removably mounted on the, or the respective, GBS 14. The switchgear 22 (and/or other components of the transmission system as is convenient) is preferably provided in a housing 23 that is separate for the housing(s) provided for the turbine generator 10 and the converter 112.

To facilitate connection and disconnection (both physically and electrically) of various components of the AC turbine generator system 10, and/or of an array of interconnected turbine generators, at least some of the components are connected using inductive power connectors 30.

Each inductive power connector comprises a first connector part 30A having a magnetic core and at least one first electrical winding provided on the magnetic core (not shown in Figure 2); and a second connector part 30B comprising a magnetic core provided around at least one second electrical winding, and a socket for receiving said first connector part. The first connector part 30A is removably insertable in the second connector part 30B and, in a connected state in which the first connector part is inserted in the second connector part, electromagnetic inductive coupling occurs between the respective windings when one of the parts is energised with AC electrical power. Accordingly, the connector 30 provides an inductive connection for transferring electrical power, without having any exposed live electrical contacts (the windings are insulated). This is particularly advantageous for underwater applications since it facilitates connection and disconnection of components underwater.

An inductive power connector 30 may for example be used to replace conventional electrical connectors, such as dry-mate or wet-mate connectors, especially in underwater electrical systems.

Alternatively, or in addition, one or more inductive power connectors 30 may be used to provide disconnectable electrical connections between components that are conventionally hardwired together.

In some embodiments, the respective windings of the first and second connector parts 30A, 30B may have an equal number of turns. Alternatively, the respective windings of the first and second connector parts 30A, 30B may have a different number of turns so that the connector 30 serves as a step-up or step down electrical transformer, depending on the turns-ratio. Advantageously, in embodiments where the power connector 30 comprises an electrical transformer, it may be used not only to provide a disconnectable electrical connection, but also to transform voltages, thereby eliminating the need to provide a separate transformer.

Optionally one or more of the first or second windings may be tapped so that the voltage ratio can be altered during operation according to prevailing conditions. For example, in the tidal current turbine application, during occasional periods of high flow it may be advantageous to have a higher voltage available at the generator. This can be achieved without increasing the voltage rating of the converter by switches that reconnect the either the converter or the generator to a different winding tap resulting in a larger ratio of generator to converter voltage. In this way the required converter rating expressed as the product of its voltage rating and current rating can be reduced, saving cost.

In the case of turbine generator systems, including tidal current turbine generator systems and wind turbine generator systems, one or more inductive power connector 30 may be used to provide the transformer 16 at the output of the converter 12, 112, and also to provide a disconnectable electrical connection between the converter 12, 112 and the transmission system, e.g. by providing a connection to the switchgear 22, or whichever component of the system follows the converter depending on the system topology, and/or between the transmission system and a cable network for interconnecting two or more turbine generator systems and/or for transmitting power to a receiving station. Such power connector(s) 30 themselves may be considered as part of the transmission system, especically in embodiments where they act as a transformer.

One or more electromagnetically inductive power connector 30 may be used to provide a disconnectable electrical connection between the turbine generator 10 and the converter 12, 112. In some systems, one or more transformer is provided between the turbine generator 10 and the converter 12, 112, and one or more inductive power connectors 30 may be used to replace such transformers (as well as providing the disconnectable electrical connection).

A respective inductive power connector 30 may be provided at each end of an electrical connection (as for example is shown in Figure 2 for the connection between the converter 112 and the switchgear 22), or at only one end of the connection (as for example is shown for the connection between the turbine generator 10 and the converter 112 in Figure 2), or at any convenient internediate location (e.g. at a location between the converter 112 and the switchgear 22). Each connector 30 may be configured to act as a transformer (step up or step down) or not to act as a transformer, as required by the application.

In use, the inductive power connectors can transfer power in either direction, from the first connector part to the second connector part, or from the second connector part to the first connector part, depending on how they are connected to the system.

The use of inductive power connectors 30 can facilitate disconnection (physical and electrical) of various components of the system. This in turn allows components of the system to be removed for maintenance separately from other components. Moreover, in cases where the connector 30 is a transformer, it removes the need to provide a separate transformer, which can simplify the system's topology and cost. In addition, in cases where the connector 30 is a transformer, it allows the operating, or rated, voltage of the relevant system component(s) to be selected independently of the voltages used by parts of the system to which it is connected, which can provide a cost saving as it allows lower rated components to be used. In particular, the connectors, as transformers, can allow different parts of a system to operate at different voltages by providing a first step-up or step-down transformer connector at the beginning of a part of the system, and a corresponding step-down or step-up transformer at the end of the part of the system. For example, in the system of Figure 2, using transfomer type connectors 30 at the input and output of the switchgear 22 allows the rated switchgear voltage to be selected independently of transmission voltages from the converter 112 to the switchgear 22, and/or from the switchgear 22 to the receiving station or other system component to which the output of the switchgear 22 may be connected, for example another switchgear unit or other transmission unit, e.g. in cases where the turbine generator system is connected to one or more other turbine generator systems and their respective outputs are combined before being transmitted to the receiving station.

By way of example the turbine generator 10 and converter 112 may be rated at 690V. The connector 30A at the output of the converter 112 may transform the converter output from 690V to 33kV for transmission to the HV switchgear housing. The connector 30B at the input of the switchgear 22 may transform 33kV to 11kV for switching, and the connector 30C may transform 11kV to 22kV for transmission to an adjacent turbine generator system, or to 33kV for transmission to shore.

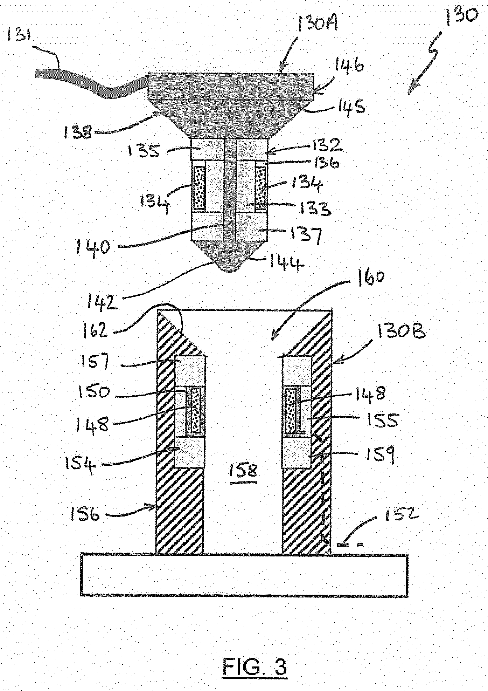

Referring now to Figure 3, there is shown an electromagnetically inductive electrical power connector 130 embodying another aspect of the invention. The power connector 130 is suitable for use as the connector 30 of Figure 2, but is not limited to such use as would be apparent to a skilled person. More generally, electrical connectors embodying the invention may be used in any application where an electrical connection is required, including but not limited to underwater applications, and especially but not exclusively where step up or step down voltage transformation is required.

The power connector 130 comprises a first connector part 130A having a magnetic core 132, and an annular electrical winding 134 provided on the magnetic core 132. The winding 134 is an electromagnetic coil comprising multiple turns of electrical conductor, typically wire. The conductor may be electrically insulated, e.g. with a coating or sheath. In preferred embodiments, the winding 134 is embedded in electrically insulating resin 136 or other suitable insulating material. The winding 134 has first and second ends (not visible) that provide a respective electrical connection (e.g. a live and neutral electrical connection) by which the first connector part 130A can be connected to an electrical circuit (not shown), in particular an AC circuit. In Figure 3, the ends of the winding are routed through the connector part 130A in any convenient manner and are made available for connection to an external circuit via cable 131.

The winding 134 is wound around the magnetic core 132. The winding is wound around a longitudinal (or central) axis of the magnetic core 132, which also corresponds to the longitudinal (or central) axis of the first connector part 130A. In preferred embodiments, the magnetic core 132 has a central portion 133 and first and second end portions 135, 137 located at a respective longitudinal end of the central portion 133. The end portions 135, 137 are preferably wider than the central portion 133 in the transverse direction. The winding 134 is wound around the central portion 133 and located between the end portions 135, 137. The magnetic core 132 is preferably I-shaped in transverse cross-section. In any event it is preferred that the magnetic core 132 is shaped to provide a recessed seat (in particular around its outer surface) for the winding 134. In preferred embodiments, the insulating material 136 and winding 134 together fill the recessed seat.

In preferred embodiments, the magnetic core 132 is symmetrical around the longitudinal axis, and is typically circular in transverse cross-section, although other cross-sectional shapes may be used.

The magnetic core 132 may be formed from any suitable magnetic material, e.g. iron, nickel, cobalt or other material with high magnetic permeability, and is typically formed from suitably shaped, stacked laminations, as is described in more detail hereinafter.

The winding 134 and magnetic core 132 are carried by a support structure 138. The support structure 138 may comprise a central support 140 extending along the longitudinal axis of the connector part 130A, the core 132 and the winding being located around the central support 140. The central support 140 may for example comprise one or more rods or bars, and may be formed of any suitable material, typically metal.

Optionally, the first connector part 130A has a leading end 142 in the longitudinal (or axial) direction that comprises at least one surface 144, which is preferably annular, which is oblique with respect to the longitudinal axis of the part 130A, and which narrows towards the tip of the end 142. The surface 144 may be conical or otherwise bevelled, chamfered or tapered, preferably around the entire longitudinal axis. For example, the leading end 142 may be cone-shaped or otherwise bevelled. The leading end 142 is conveniently part of the support structure 138.

Optionally, the other end 146, opposite the leading end 142, of the first connector part 130A comprises a stop portion 145 that is wider than the magnetic core 132 in the transverse direction. For example, the stop portion may flare outwardly in the transverse direction with respect to the core 132, and may be conical or frustoconical in shape.

The power connector 130 further includes a second connector part 130B comprising a second annular electrical winding 148. The winding 148 is an electromagnetic coil comprising multiple turns of electrical conductor, typically wire. The conductor may be electrically insulated, e.g. with a coating or sheath. In preferred embodiments, the winding 148 is embedded in electrically insulating resin 150 or other suitable insulating material. The winding 148 has first and second ends (not visible) that provide a respective electrical connection (e.g. a live and neutral electrical connection) by which the first connector part 130B can be connected to an AC electrical circuit (not shown). In Figure 3, the ends of the winding are routed through the connector part 130B in any convenient manner and are made available for connection to an external circuit via cable 152.

The second connector part 130B includes a magnetic core 154 located around the winding 148. The winding 148 is wound around a longitudinal (or central) axis of the magnetic core 154, which also corresponds to the longitudinal (or central) axis of the second connector part 130B. The magnetic core 154 is typically annular, the winding 148 being located around an inner surface of the core 154. In preferred embodiments, the magnetic core 154 has an outer portion 155 and first and second annular end portions 157, 159 located at a respective longitudinal end of the outer portion 155. The winding 148 is wound around an inner surface of the outer portion 155, and located between the end portions 157, 159. In any event it is preferred that the magnetic core 154 is annular and is shaped to provide a recessed seat around its inner surface for the winding 154. In preferred embodiments, the insulating material 150 and winding 148 together fill the recessed seat.

In preferred embodiments, the magnetic core 154 is symmetrical around the longitudinal axis, and is typically circular in transverse cross-section, although other cross-sectional shapes may be used.

The magnetic core 154 may be formed from any suitable magnetic material, e.g. iron, nickel, cobalt or other material with high magnetic permeability, and is typically formed from suitably shaped, stacked laminations, as is described in more detail hereinafter.

The winding 148 and magnetic core 154 are carried by a support structure 156. The support structure 156 can take any suitable form, typically being configured to support the winding 148 and core 154 with respect to a ground surface, e.g. the seabed or a GBS, or other surface. The second connector part 130B is shaped to define a socket 158. The magnetic core 154 and winding 148 are located around the socket 158, in particular around the central or longitudinal axis of the socket 158. The preferred arrangement is such that the winding 148 extends around the socket 158 such that their respective longitudinal axes are coincident or parallel. In preferred embodiments, the winding 148 is wound around the longitudinal axis of the socket 158. The magnetic core 154 extends around the winding 148 and the socket 158 with its longitudinal axis coincident or parallel with the longitudinal axis of the winding 148 and socket 158. Typically, the magnetic core 154 and the winding 148 are shaped to define the socket 158. The support structure 156 may also be shaped to define the socket or at least part of it.

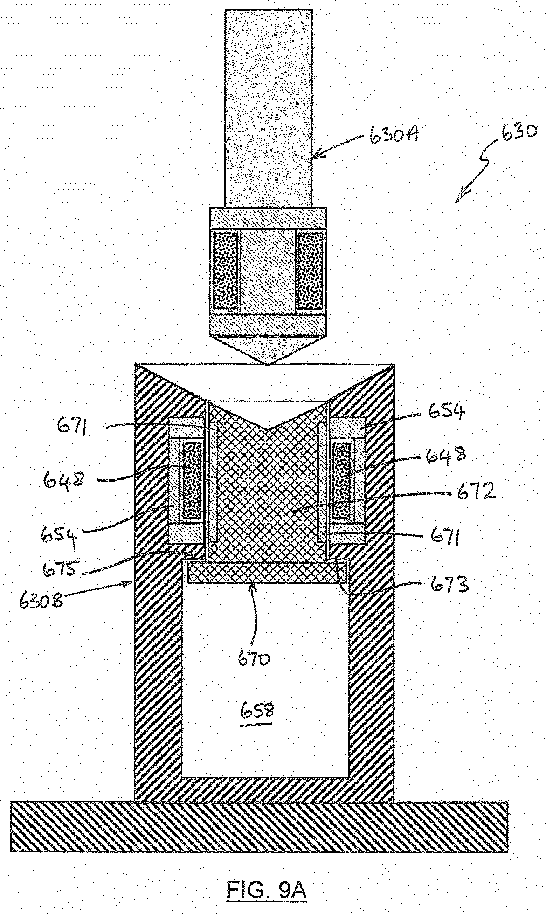

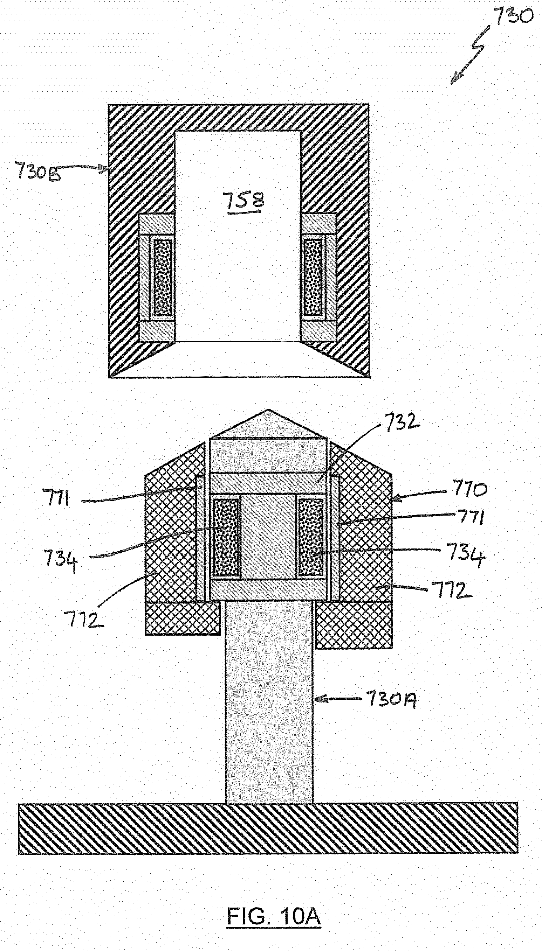

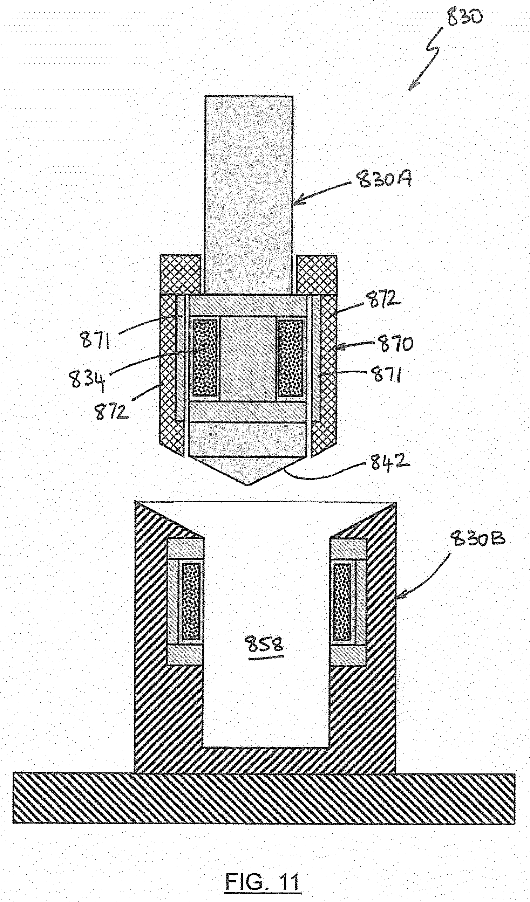

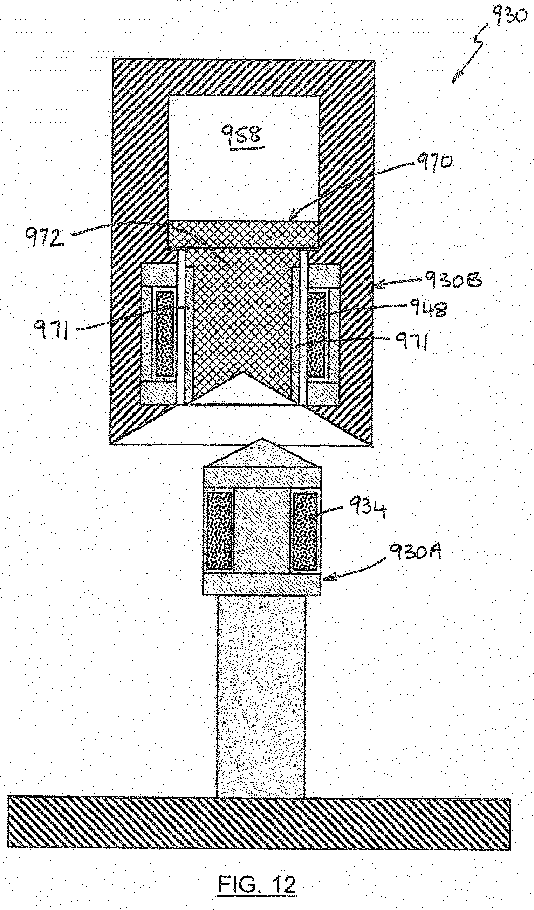

The socket 158 is shaped and dimensioned to removably receive the first connector part 130A, and in particular to receive the core 132 and winding 134. The first connector part 130A is therefore removably insertable into, and removable from, the second connector part 130B. The first connector part 130A may therefore be referred to as a male part, while the second connector part 130B may be referred to as a corresponding female part. It will be understood that insertion of the first connector part into, and removal of the first connector part from, the second connector part can be achieved by holding either connector part static and moving the other connector part relative to it, or by moving both connector parts relative to each other, as is convenient. For example, Figures 9A to 9C and 11 show embodiments where the second connector part is static and the first connector part moves relative to it, while Figures 10A to 10C and 12 show embodiments where the first connector part is static and the second connector part moves relative to it.

Figure 3 shows the first and second parts 130A, 130B in a non-connected state. In a connected state, in which the first connector part 130A is inserted in the second connector part, the magnetic core 132 and the electrical winding 134 are located within the socket 158, and within, or at least partly within, the second electrical winding 148, i.e. within or at least partly within the hollow core defined by the winding 148. In the connected state the first winding is preferably coaxial with the second winding. The arrangement is such that, when either one of the windings 134, 148 is energised with AC electrical power, the other of the windings 148, 134 is energised by inductive electromagnetic coupling between the windings. This allows electrical power to be transferred between any AC electrical circuit connected to either one of the windings 148, 134, and any AC electrical circuit connected to the other winding 134, 148, thereby causing the power connector 130 to serve as an electrical connector. In the connected state, the respective longitudinal (or central) axis of the windings 134, 148 and cores 132, 154 are substantially coincident, preferably being exactly coincident or as close to exactly coincident as is practicable. In preferred embodiments, the longitudinal (or central) axis of the windings 134, 148 and cores 132, 154 corresponds to the longitudinal (or central) axis of the respect connector part 130A, 130B.

Advantageously, the first and second connector parts 130A, 130B are movable with respect to each other into and out of the connected state, along a central, or longitudinal axis, of the socket 158, which in the connected state, is coincident or parallel with the central, or longitudinal, axis of the windings 134, 148 and cores 132, 154.

The support structure 156 may take any suitable form, e.g. comprising a framework or solid structure, and may be configured to include, or otherwise to serve as, a stand for supporting the core 154 and winding 148 on a surface, for example the sea bed or a GBS.

The second connector part 130B has a mouth 160 through which the first connector part 130A can be inserted into the socket 158, the support structure 156 conveniently being shaped to provide the mouth 160. Optionally, the mouth 160 comprises at least one surface 162, which is preferably annular, which is oblique with respect to the longitudinal axis of the part 130B, and which narrows in a direction towards the core 154. The surface 162 may be conical or otherwise bevelled, chamfered or tapered, preferably around the entire longitudinal axis.

In preferred embodiments where the end 142 of the first connector part 130A and the mouth 160 of the second connector part 130B each comprises bevelled portions, this facilitates insertion of the first part 130A into the second part 130B as it corrects transverse misalignment between the parts 130A, 130B as they are brought together.

In embodiments where the first connector part 130A has a stop portion 145, the bevelled mouth 160 advantageously provides a seat for the stop 145 (and to this end they may be correspondingly shaped). The preferred arrangement is that when the stop 145 is seated, the respective windings 134, 148 are aligned with each other in the longitudinal (or axial) direction.

Optionally, the other end 146, opposite the leading end 142, of the first connector part 130A comprises a stop portion that is wider than the magnetic core 132 in the transverse direction. For example, the stop portion may flare outwardly in the transverse direction with respect to the core 132, and may be conical or frustoconical in shape.

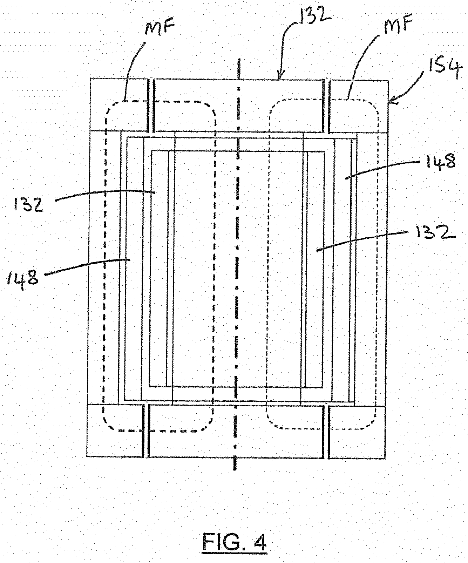

Figure 4 shows the magnetic cores 132, 154 and respective windings 134, 148 when the first and second connector parts 130A, 130B are in the connected state. The magnetic cores 132, 154 of each part 130A, 130B together form a composite magnetic core around the windings 134, 148. In use, magnetic flux generated by the windings 134, 148 is confined and guided by the composite core 132, 154 as indicated by the flux lines MF.

In Figure 3, only one set of electrical windings 134, 148 is shown. Such an arrangement may be suitable, for example, for applications where a single phase electrical connection is required. However, more than one set of windings may alternatively be provided, for example for use in applications where a multi-phase electrical connection is required, and/or in applications where more than one electrical circuit requires connection to another, or a respective other, electrical circuit

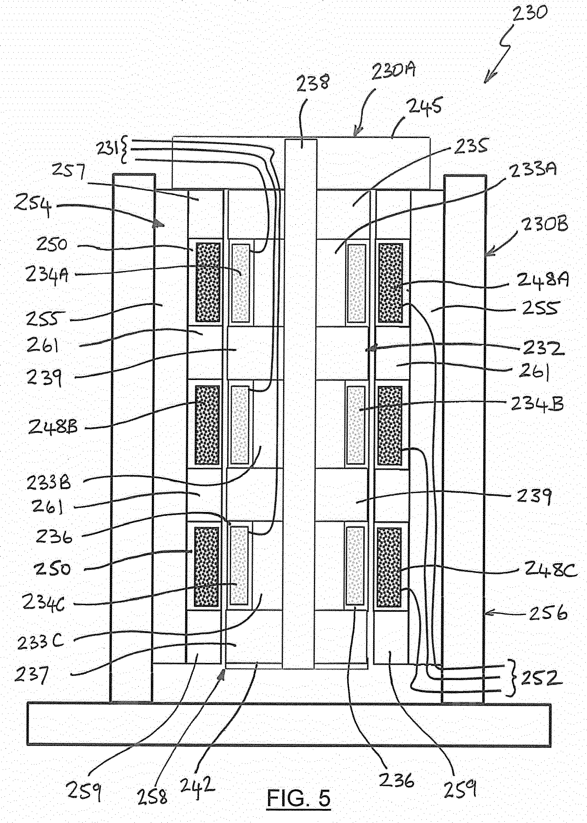

Figure 5 illustrates a second inductive electrical connector 230 embodying the invention. Unless otherwise indicated or apparent, the electrical connector 230 is the same or similar to the connector 130, like numerals being used to denote like parts and the same or similar description applying as would be apparent to a skilled person. The connector 230 comprises first and second removably interconnectable connector parts 230A, 230B. The first part 230A comprises a magnetic core 232 around which a plurality of first electrical windings 234A, 234B, 234C are provided. The first part 230A also comprises a support structure 238 for the core 232 and windings 234.

The first windings 234A, 234B, 234C are spaced apart from each other along the core 232 in the longitudinal (or axial) direction, i.e. spaced apart in the direction of the longitudinal, or central, axis of the core 232. Each first winding 234A, 234B, 234C is separated from the, or each, adjacent first winding by part of the magnetic core 232. Preferably, the first windings 234A, 234B, 234C are substantially aligned, or in register, with each other in the transverse direction. In particular, it is preferred that the first windings 234A, 234B, 234C are co-axial with one another.

Each first winding 234A, 234B, 234C is wound around the longitudinal (or central) axis of the magnetic core 232, which typically corresponds to the longitudinal (or central) axis of the first connector part 230A. In preferred embodiments, the magnetic core 232 has a central portion 233A, 233B, 233C around which the first windings 234A, 234B, 234C are wound, first and second end portions 235, 237 located at a respective longitudinal end of the magnetic core 232, and a respective intermediate portion 239 located between each adjacent first winding (i.e. one between windings 234A and 234B, and one between windings 234B and 234C in this example). The end portions and intermediate portions are preferably wider than the central portions in the transverse direction. Each first winding is therefore located between either two intermediate portions of the core 232, or between an intermediate portion and an end portion of the core. In any event it is preferred that the magnetic core 232 is shaped to provide a respective recessed seat (in particular around its outer surface) for each first winding 234A, 234B, 234C, the seats being spaced apart in the longitudinal direction. In preferred embodiments, the insulating material 236 and winding 234 together fill the respective recessed seat. In preferred embodiments, the intermediate and end portions of the core 232 are substantially aligned, or in register, with each other in the transverse direction, i.e. are co-axial. The seats are preferably substantially aligned, or in register, with each other in the transverse direction, i.e. are co-axial.

The second connector part 230B comprises a magnetic core 254 provided around a plurality of second electrical windings 248A, 248B, 248C. The second part 230B also comprises a support structure 256 for the core 254 and windings 248. The support structure 256 may take any suitable form, e.g. comprising a framework or solid structure, and may be configured to include, or otherwise to serve as, a stand for supporting the core 254 and windings 248 on a surface, for example the sea bed or a GBS. Typically, the magnetic core 254 and the windings 248 are shaped to define the socket 258. The support structure 256 may also be shaped to define the socket or at least part of it.

The second windings 248A, 248B, 248C are spaced apart from each other along the core 254 in the longitudinal (or axial) direction, i.e. spaced apart in the direction of the longitudinal, or central, axis of the core 254. Each second winding 248A, 248B, 248C is separated from the, or each, adjacent second winding by part of the magnetic core 254. Preferably, the second windings 248A, 248B, 248C are substantially aligned, or in register, with each other in the transverse direction. In particular, it is preferred that the second windings 248A, 248B, 248C are co-axial with one another.

The magnetic core 254 is annular and is located around the second windings 248A, 248B, 248C. The windings 248A, 248B, 248C are wound around a longitudinal (or central) axis of the magnetic core 254, which typically corresponds to the longitudinal (or central) axis of the second connector part 230B and of the socket 258. The windings 248A, 248B, 248C are located around an inner surface of the core 254. In preferred embodiments, the magnetic core 254 has an outer portion 255 located around the second windings 234A, 234B, 234C, first and second annular end portions 257, 259 located at a respective longitudinal end of the magnetic core 254, and a respective annular intermediate portion 261 located between each adjacent second winding (i.e. one between windings 248A and 248B, and one between windings 248B and 248C in this example). Each second winding is therefore located between either two intermediate portions of the core 254, or between an intermediate portion and an end portion of the magnetic core. In any event it is preferred that the magnetic core 254 is shaped to provide a respective recessed seat (in particular around its inner surface) for each first winding 248A, 248B, 248C, the seats being spaced apart in the longitudinal direction. In preferred embodiments, the insulating material 250 and winding 248 together fill the respective recessed seat. In preferred embodiments, the intermediate and end portions of the core 254 are substantially aligned, or in register, with each other in the transverse direction, i.e. are coaxial. The seats are preferably substantially aligned, or in register, with each other in the transverse direction, i.e. are co-axial.

Figure 5 shows respective cables or leads 231, 252 for electrically connecting the respective ends of each winding 234A, 234B, 234C, 248A, 248B, 248C to an external circuit.

In Figure 5, the first part 230A is shown fully inserted into the second part 230B, i.e. in the connected state. Figure 5 illustrates a preferred arrangement in which there is an equal number of first and second windings 234, 248, and wherein each of the first windings 234A, 234B, 234C is substantially in register, or aligned, with a respective one of the second windings 248A, 248B, 248C in the longitudinal direction. As such it may be said that there are multiple sets of first and second windings. In the connected state the first windings are preferably coaxial with the second windings.

More generally, it is preferred that the first connector part and the second connector part have an equal number of recessed seats for receiving first and second windings respectively. Advantageously, in the connected state the, or each, recessed seat of the first connector part is longitudinally aligned with a corresponding recessed seat of the second connector part.

It is particularly preferred that the respective parts of the magnetic cores 232, 254 that are located between the respective first and second windings, and at each end of the first and second windings, are also substantially in register, or aligned, with one another longitudinally in the connected state. Hence, in the present example, the end portions 235, 235 of the core 232 are aligned with the end portions 257, 259 of the core 254 respectively, and each intermediate portion 239 of the core 232 is aligned with a corresponding intermediate portion 261 of the core 254. As such, the respective aligning portions of the respective cores are preferably of the same length in the longitudinal direction, and respective aligning first and second windings are preferably also of the same length in the longitudinal direction. Exact alignment, or as close to exact alignment as is practicable, is preferred although relatively small deviations from this will not unduly affect the operation of the connector as would be apparent to a skilled person.

In any event, the alignment of the respective magnetic cores 232, 254 in the connected state creates a magnetic circuit around the first and second windings that allows magnetic flux to be transferred between the cores 232, 254.

It is not essential that, in the connected state, respective first and second windings 234, 248 that are intended to electromagnetically couple in use are exactly aligned with each other in the longitudinal direction. The first and second windings 234, 248 that are intended to electromagnetically couple in use may be of the same length (in the longitudinal direction), but may alternatively be of different lengths. However, it is preferred that the first and second windings are axially aligned do not axially overlap the magnetic cores, otherwise the strong magnetic field presented by the cores may induce large unwanted eddy current losses within the conductors of the windings.

In alternative embodiments, there may be a different number of first and second windings 234, 248. In this case, the, or each, first winding 234 may be arranged to electromagnetically couple with one or more second winding 248, or the, or each, second winding 248 may be arranged to electromagnetically couple with one or more first winding 234, as required by the application. More generally, the first connector part 230A may have one or more first winding 234, and the second connector part 230B may have one or more second winding 248, the respective number of windings on each part 230A, 230B being the same or different depending on the requirements of the application, the or each first winding electromagnetically coupling with the, or at least one second winding in use.

Since it is preferred that there is an equal number of recessed seats in the first and second connector parts, in embodiments where there is a different number of windings in the first and second parts, one or more of the recessed seats of either of the connector parts may accommodate a different number of windings that the corresponding, aligned, recessed seat of the other connector part. In cases where a recessed seat accommodates more than one winding, the windings may be coaxially or concentrically arranged in the recessed seat, and may have the same or a different number of turns as required by the application. In any case, the windings may be electrically (galvanically) isolated from each other by any convenient conventional means.

Fore example, the first connector part 230A may havethree windings 234A, 234B, 234C connected to a balanced three phase supply A, B, C. The second connector part 230B may have six windings Aa, Ab, Ba, Bb, Ca, Cb (not illustrated). Either Aa is concentric with Ab or Aa and Ab are coaxial and abutted within a common seat in the magnetic core 232. Aa and Ab could be electrically (galvanically) isolated. Aa and Ab may have different numbers of turns. An application for this arrangement may be a 690V 2MVA main winding from the converter and a 110V, 10kVA winding for auxiliary power. Power could flow in either direction from any winding to any other.

In some embodiments, the connector 230 may be used to connect multi-phase electrical power, and may comprise a respective set of first and second windings 234, 248 for each phase. For example the embodiment of Figure 5 has three sets of first and second windings 234, 248 and may be used to connect circuits using a 3 phase electrical supply. The connector 230 may therefore be used to connect components of a 3 phase turbine generator system, as described by way of example with reference to Figure 2.

In embodiments where there is a respective set of first and second windings for connection to each phase of a 3 phase supply (for example the embodiment of Figure 3), the windings of either the first connector part or the second connector part are connected to a respective phase of a balanced 3 phase voltage supply. For example, each of the first windings 234A, 234B, 234C is connected to a respective phase of the 3 phase supply, or each of the second windings 248A, 248B, 248C is connected to a respective phase of the 3 phase supply. In either case, it is advantageous that the outer two windings (e.g. 234A and 234C or 248A and 248C) are connected to their respective phase in the same sense (i.e. the same polarity), while the middle winding (e.g. 234B or 248B) is connected to its respective phase in the opposite sense (i.e. the opposite polarity). This arrangement causes the magnetic flux amplitudes to be the same in each part of the magnetic core 232, 254 that separates adjacent windings. As a result, these winding-separating parts of the magnetic core can all be of the same thickness. More generally, where the relevant connector part has 3 or more windings, it is preferred to alternate the polarity of their connections to a respective phase of a balanced multi-phase voltage supply.

In use, connectors embodying the invention can transfer power in either direction, from the first connector part to the second connector part, or from the second connector part to the first connector part, depending on how they are connected to the relevant electrical circuit(s). For example, either of the first or second connector parts can be connected to a live circuit, or a power supplying circuit, while the other part is connected to a load circuit. It is preferred to connect the first connector part to the live circuit.

In use, if either the first or second windings are connected to a high voltage supply, then if the surrounding medium is air, corona discharge is likely, and if the medium is water the insulation around the windings may be highly stressed. To alleviate these problems, it is preferred that the windings are arranged so that their low or earth potential ends (i.e. the ends that are connected to the low or earth potential of the voltage supply in use) are adjacent the gap between the first and second connector parts, i.e. such that the conductors of the winding that are at low or earth potential in use are adjacent the outer side of the relevant part of the connector. Correspondingly it is preferred that the high potential ends (i.e. the ends that are connected to the high potential of the voltage supply in use) are further the gap between the first and second connector parts, i.e. such that the conductors of the winding that are at low or earth potential in use are adjacent the inner side of the relevant part of the connector. As a result, the exposed layer of resin and insulation is not highly stressed even with a high voltage winding.

To facilitate this arrangement, where the supply voltage is a high-voltage three-phase supply, it is preferred to connect the relevant first or second windings to the voltage supply using a three phase star connection, i.e. resulting in a star-connected three-phase winding.

In some embodiments, the connector 130, 230 may be configured to transfer power without stepping up or stepping down the voltage level. To this end, the number of turns in the, or each, first winding 134, 234 may be the same as the number of turns in the, or each, second winding 148, 248 with which it electromagnetically couples in use. This arrangement does not transform the voltage level provided the respective windings are longitudinally aligned.

In other embodiments, the connector 130, 230 may be configured to step up or step down the voltage level, i.e. to act as a power transformer. To this end, the number of turns in the, or each, first winding 134, 234 may be different from the number of turns in the, or each, second winding 148, 248 with which it electromagnetically couples in use, the respective turns ratio depending on the required transformation.

It will be understood that the level of voltage transformation may depend not only on the turns ratio but also on the alignment of the windings (since this determines how many turns will couple). It is preferred that respective first and second windings that are intended to electromagnetically couple in use are aligned with each other in the longitudinal direction to maximise the coupling between the windings.

In some embodiments, for example for connecting multi-phase AC power, when the connector 230 is configured to act as a transformer, each set of first and second windings is configured to transform the voltage level in the same way. In other embodiments, one or more sets of first and second windings may be configured to transform voltage levels differently or not at all.

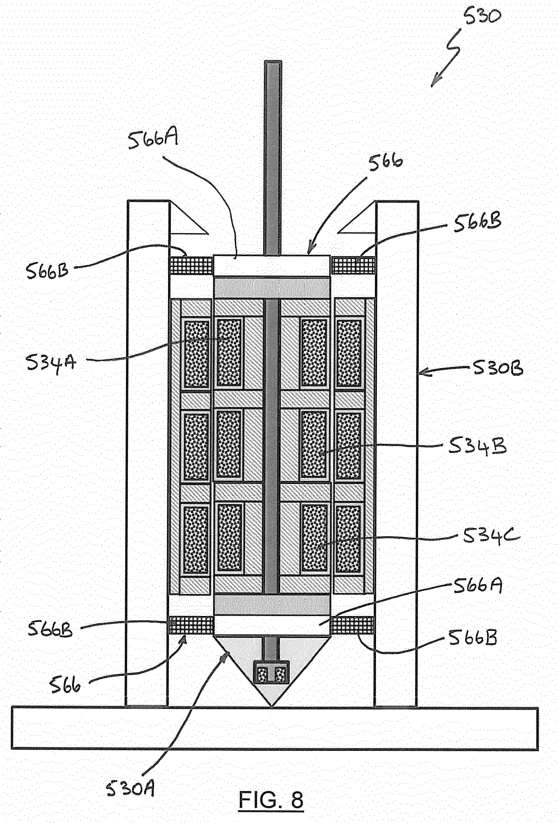

In the embodiment of Figure 5, the first connector part 230A has a stop 245 that is not bevelled as described for the stop of Figure 3, but it could alternatively be bevelled as described for Figure 3. The mouth of socket 258 and the leading end 242 of the first connector part 230A are not bevelled, but they could alternatively be bevelled as described for Figure 3. More generally, any embodiment of the connector may include any convenient stop means for correctly locating the first connector part relative to the second connector part when in the connected state. As shown in Figures 3 and 5, the stop means may be provided by engagement of a formation (or stop) provided on the first connector part with the mouth of the socket, or as illustrated in Figure 8 could be provided by engagement of the leading end of the first connector part with a surface, e.g. of the base, of the second connector part.

The first and second windings are located, respectively, at an outer surface and an inner surface of respective connector part 130A, 130B; 230A, 230B so that the respective magnetic cores do not extend between respective first and second windings are that intended to electromagnetically couple.

When in the connected state, there is typically a gap between the first and second connector parts 130A, 130B; 230A; 230B. The gap may allow a relatively small angular divergence between the longitudinal axis of the respective magnetic cores 132, 232, 154, 254 of the first and second connector parts. It is preferred however to keep the magnetic core and winding(s) of the first connector part centrally located in the socket 158, 258 since, in a non-central position, the magnetic flux concentrates toward the smallest region of the gap. The attractive magnetic force is higher at this location, which pulls the first connector part 130A, 230A toward a position of greater eccentricity, i.e. its position is unstable.

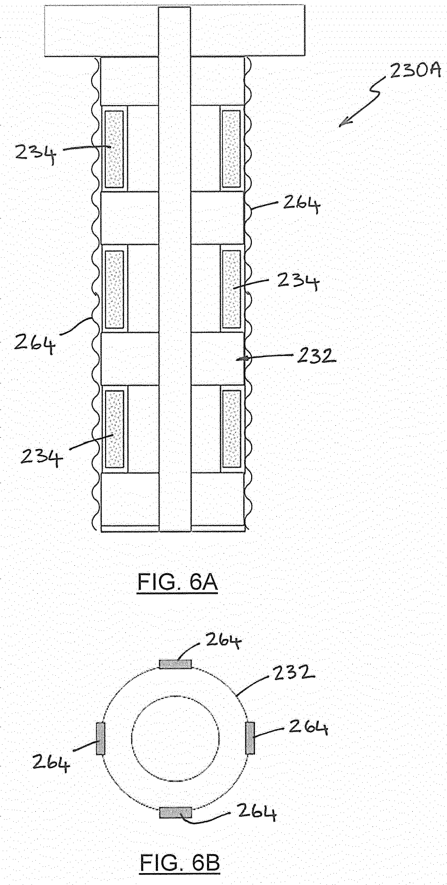

With reference to Figures 6A and 6B, a solution to this problem is to fit one or more spacing elements 264 to an external surface of the first connector part 230A (e.g. along the length of the core 232 or at intervals along the core 232), or to an inner surface of the socket 258 (e.g. along the length of the core 254 or at intervals along the core 254). The spacing elements provide a counteracting stabilising stiffness. The spacing elements 264 are preferably resiliently deformable in the transverse direction. Typically two or more spacing elements 264 are spaced apart around the magnetic core 232 and are arranged to hold it in a central position in the socket 258. The illustrated example shows four spacing elements 264 radially spaced by 90 degrees around the core 254. By way of example, each spacing element 264 may comprises a ripple spring. Optionally, a respective groove may be provided in the relevant core 232, 254 for receiving the ripple spring or other spacing element. The spacing elements may be made from a high resistivity material such as stainless steel to minimise eddy current losses, or from a non-conducting composite material.

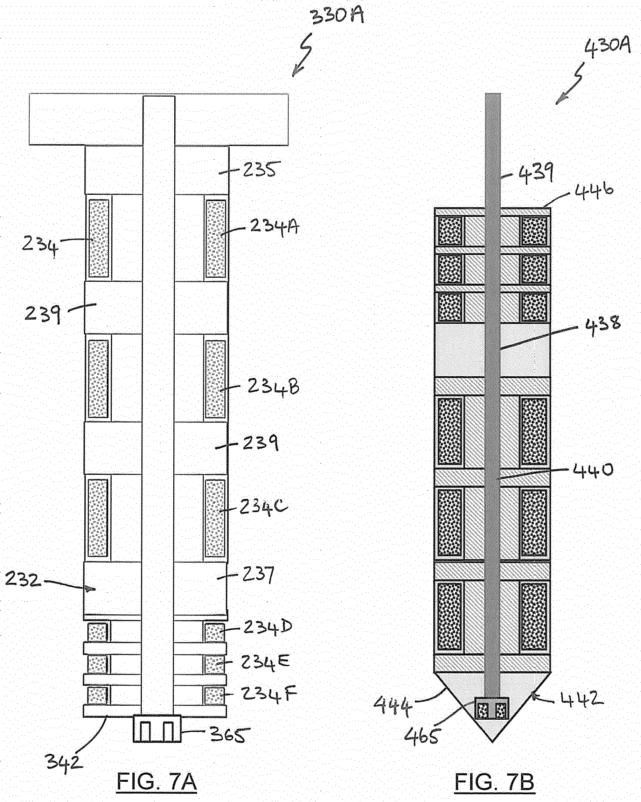

Figure 7A is a sectioned side view of a first connector part 330A of a third embodiment of the electrical connector. Much of connector part 330A is the same as the connector part 230A and so the same reference numerals are used as applicable and the same description applies as would be apparent to a skilled person. The connector part 330A includes three additional first windings 234D, 234E, 234F, which are longitudinally spaced apart on the magnetic core 232 and separated by respective parts of the magnetic core 232. In other embodiments more, or fewer, additional windings may be provided. The corresponding second connector part (not shown) includes corresponding second windings, which may be provided in the same manner as described above in relation to the second windings 248, and located to electromagnetically couple with a respective one of the additional first windings 234D, 234E, 234F. The additional first windings 234D, 234E, 234F, together with the respective second windings, each provides an additional inductive power connection when in the connected state. By way of example, in embodiments where the main sets of first and second windings 234A, 248A; 234B, 248B; 234C, 248C, provide a multi-phase power connection, the or each set of additional first and second windings may be used to connect parts of auxiliary circuits, for example control or monitoring circuits and/or to provide auxiliary power to components such as sensors.

Optionally, the power connector may be provided with an inductive coupler for transmitting control and/or data signals, e.g. Supervisory control and data acquisition (SCADA) signals, when in the connected state. A respective set of first and second windings may be provided for this purpose. By way of example, in Figure 7A, a first part 365 of an inductive coupler is provided at the leading end 342 of the connector part 330A, a corresponding second part (not shown) being provided on the corresponding second part of the connector, the arrangement being such that the inductive coupler parts inductively couple when the connector is in the connected state. The inductive coupler may for example comprise a coaxial split core inductor or transformer. It will be understood that such an inductive coupler may be provided on any embodiment of this invention.

Figure 7B shows a first connector part 430A of a fourth embodiment of the electrical connector. The connector part 430A is similar to the connector parts 230A, 330A and a similar description applies as would be apparent to a skilled person. The support structure 438 includes a portion 439 that projects from the end 446 opposite the leading end 442, preferably in the direction of the longitudinal axis. Conveniently, the projecting portion is part of the central support structure 440. The projecting portion 439, which may be rod-like, is amenable to being gripped, e.g. by human hand or mechanical gripper, and facilitates insertion or removal of the first connector part 430A with respect to the corresponding second connector part. Alternatively, the projecting part may comprise a cable. A similar projecting portion may be provided on any embodiment of this invention.

The first connector part 430A also includes a bevelled annular surface 444 at its leading end 442, preferably provided by a conical end portion. Optionally, part 465 of an inductive coupler is provided in the end portion (whether it is conical or not). Similar arrangements may be provided on any embodiment of this invention.

Figure 8 shows a fifth embodiment of an electrical connector 530 embodying the invention. Unless otherwise indicated or apparent, the electrical connector 530 is the same or similar to the connectors 130, 230, 330, 430, like numerals being used to denote like parts and the same or similar description applying as would be apparent to a skilled person. The connector 530 comprises first and second removably interconnectable connector parts 530A, 530B. The connector part 530A is most similar to the connector parts 430A although only includes 3 first windings 534A, 534B, 534C in this example. and a similar description applies as would be apparent to a skilled person. The second connector part 530B may be the same or similar to the connector part 230B.

In preferred embodiments, including all embodiments described herein, it is preferred that the connectors 130, 230, 330, 430, 530, including the first and second connector parts individually, are axially symmetric, i.e. symmetric about their longitudinal axis, preferably being circular in transverse cross section. Moreover, the first connector part (in particular the assembly of the magnetic core and the first windings) and the second connector part (in particular the assembly of the annular magnetic core and the second windings) are preferably circular in transverse cross-section. As a result, the first connector part is rotatable in the socket of the second connector part. Relative rotation between the first and second connector parts may cause wear of any surfaces in contact during rotation. Optionally, such contact surfaces may be provided with a wear-resistant coating. Alternatively, the contact surfaces may be separated by providing bearing surfaces between the first and second connector parts.

As illustrated in the embodiment of Figure 8, to facilitate relative rotation between the first and second connector parts, one or more sets of bearings 566 may be provided on the first and second connector parts 530A, 530B. For example, a respective set of bearings 566 may be provided at each end of the first and second connector parts. By way of example, each set of bearings 566 may comprise an annular outer bearing 566B provided on the second connector component 530B and a corresponding inner bearing 566A, which may be disc-like or annular. It will be apparent that one or more sets of bearings may be provided in any of the embodiments described herein.

The connector is therefore able to transfer power in a system with relatively rotating components while also performing the function of transformer and / or connector, and without the need for brushes and slip rings. Examples of applications for this include: onshore and offshore wind turbines, where power transfer between the nacelle and support tower is usually carried out by means of pendant cables that must be occasionally unwound. Often the grid transformer is housed within the nacelle and so the connector replaces this item releasing space in the nacelle or making more space available or allowing a smaller nacelle to be used; offshore floating wind turbines or wave-power devices which need to be coupled electrically to subsea cables and which may need to move relative to the mooring point. One or more connectors allowing relative rotary movement between the connector parts would be useful in such applications.

In use, when the first connector part 130A, 230A, 330A, 430A, 530A is removed from the respective second connector part 130B, 230B, 330B, 430B, 530B, each of the connector parts appears as an inductor in the respective electrical circuit to which it is connected. As a result, if the circuit is energised, respective first or second windings of the relevant connector part may carry a higher current than the winding coil can withstand. Also, magnetic fields may be generated outside of live disconnected connector parts that may be considered undesirable for environmental reasons.

One solution is to provide a switch for disconnecting the relevant connector part from its circuit when it is disconnected from its corresponding connector part. However this solution is expensive, occupies considerable space, requires maintenance and requires an auxiliary power supply.

A preferred solution to this problem is to provide the power connector with a magnetic shunt that is movable with respect to a respective one of the first and second connector parts into and out of an active state in which it forms part of a magnetic circuit around one or more of the respective first or second windings of the respective connector part. Advantageously, in the active state, the magnetic shunt completes, or substantially completes, a magnetic circuit around the respective winding(s). This increases the inductance presented to the relevant electrical circuit by the respective connector part, which reduces the electrical current flowing in the winding coil(s) in comparison to when the shunt is not present, and has a containing effect on the magnetic field generated by the respective connector part when live. To this end the magnetic shunt comprises a magnetic component that is shaped and dimensioned to serve as a magnetic shunt when in the active state. As is described in more detail below, this may be achieved using an annular magnetic component (e.g. sleeve-like) that is dimensioned in the transverse direction either to substantially fill the socket such that it is located adjacent the second winding(s) in the active state, or to fit around the magnetic core of the first connector component such that it is located adjacent the first winding(s) in the active state, and dimensioned in the longitudinal direction to extend alongside, preferably fully, one or more winding as applicable.

Optionally, one or more power actuator (not shown) may be provided to move the magnetic shunt into and out of its active state. However this is expensive, occupies considerable space, requires maintenance and requires an auxiliary power supply. In preferred embodiments therefore the magnetic shunt is configured to move into the active state under the influence of gravity, buoyancy and/or resilient bias in response to removal of the first connector part from the second connector part. It is also preferred that the magnetic shunt is moved out of the active state in response to insertion of the first connector part into he second connector part, conveniently by engagement with one or other of the first or second connector parts.

Referring now to Figures 9A to 9C, there is shown an example of a power connector 630 embodying the invention and including a movable magnetic shunt 670. The electrical connector 630 may be the same or similar to the connector 130, like numerals being used to denote like parts and the same or similar description applying as would be apparent to a skilled person. The connector 630 comprises first and second removably interconnectable connector parts 630A, 630B. The magnetic shunt 670 is located in the socket 658 of the second connector part 630B and is movable axially within the socket 658 into and out of a active state (as shown in Figure 9A). In the active state, the shunt 670 is aligned, or in register, with the second winding 648 in the axial direction, and with the magnetic core 654 around the second winding 648. The shunt 670 comprises magnetic material 671 that extends, in the active state, alongside the second winding 648 to form, together with the magnetic core 654, a magnetic circuit around the winding 648. In this example, the magnetic material 671 is provided as one or more annular component (e.g. a cylinder, or a plurality of axially disposed bars), which in the active state is located within the hollow core of the second winding and is dimensioned and positioned to form part of the magnetic circuit as described above.

Optionally, one or more springs, e.g. compression spring(s), or other resilient biasing device (not shown), is coupled to the shunt 670 and arranged to urge the shunt 670 into the active state. For example, the or each resilient biasing device may be provided in the socket 658 coupled between the shunt 670 and the socket 658.

Optionally, the shunt 670 includes a buoyant component 672, or float, formed from one or more materials that are buoyant in water or other medium in which the connector is intended to be used. For example, the shunt 670 may have a float in the form of a buoyant core 672 within the annular magnetic component 671. When the second connector part 630B is immersed in water (or other relevant medium) the buoyancy of the component 672 causes the shunt 670 to rise towards and into the active state, in the absence of any overpowering counteracting force.

Optionally, the shunt 670 and/or the second connector part 630B may be provided with stop means for limiting movement of the shunt 670 in the direction towards the active state so that it does not travel beyond the desired location when in the active state. For example, the shunt 670 and the socket 658 may be provided with mutually engageable, e.g. transverse, surfaces 673, 675, which engage to hold the shunt 670 in the active state. Alternatively, a tie (not illustrated) may be connected between the shunt 670 and the second connector part 630 to limit movement of the shunt 670.

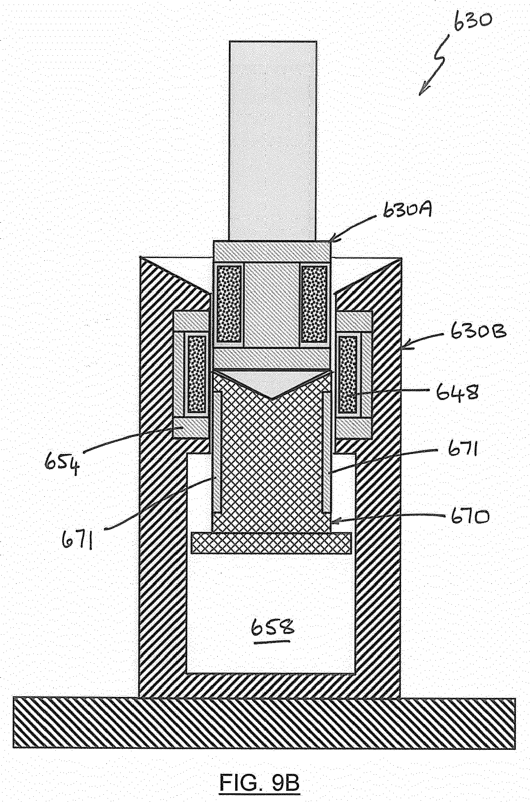

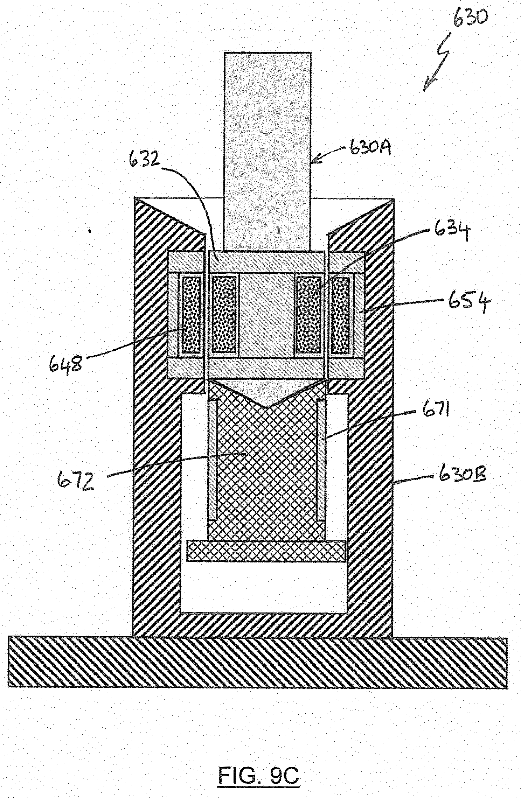

Figure 9A shows the shunt 670 in the active state with the first connector part 630A removed from the socket 658. Figure 9B shows how the first connector part 630A engages with the shunt 670 when it enters the socket 658, and displaces the shunt 670 out of the active state (against the buoyancy of the shunt and/or any counteracting resilient bias, as applicable). Figure 9C shows the first connector part 630A in its connected state, with the shunt 670 displaced fully out of alignment with the second winding 648. As for all embodiments, any convenient stop means (not shown) may be provided to limit movement of the first connector 630A to cause it to stop when it reaches the desired location for the connected state. For example, a stop may be provided between the shunt and the bottom of the socket to limit the downward movement of the shunt.

In the embodiment of Figures 9A to 9C, the second connector part 630B is typically the static part, e.g. being fixed to the sea bed or a GBS, and the first connector part 630A is movable. Figures 10A to 10C show an alternative embodiment of a connector 730 in which the first connector part 730A may be the static part, and the second connector part 730B may be movable. The electrical connector 730 may be the same or similar to the connectors 130, 630, like numerals being used to denote like parts and the same or similar description applying as would be apparent to a skilled person.

The magnetic shunt 770 is located on the outside of the first connector part 730A and is movable axially with respect to the first connector part 730A into and out of a active state (as shown in Figure 10A). In the active state, the shunt 770 is aligned, or in register, with the first winding 734 in the axial direction, and with the magnetic core 732 around which the first winding is located. The shunt 770 comprises magnetic material 771 that extends, in the active state, alongside the first winding 734 to form, together with the magnetic core 732, a magnetic circuit around the winding 734. In this example, the magnetic material 771 is provided as one or more annular component (e.g. a cylinder, or a plurality of axially disposed bars), which in the active state is located around the first winding 734 and is dimensioned and positioned to form part of the magnetic circuit as described above.

Optionally, one or more springs, e.g. compression spring(s), or other resilient biasing device (not shown), is coupled to the shunt 770 and arranged to urge the shunt 770 into the active state. For example, the or each resilient biasing device may be coupled between the shunt 770 and the first connector part 730A, or a surface on which it is mounted.

Optionally, the shunt 770 includes a buoyant component 772, or float, formed from one or more materials that are buoyant in water or other medium in which the connector is intended to be used. For example, the shunt 770 may have a float in the form of a buoyant annular body 772 located around the magnetic component 771. When the second connector part 730A is immersed in water (or other relevant medium) the buoyancy of the component 772 causes the shunt 770 to rise towards and into the active state, in the absence of any overpowering counteracting force.

Optionally, the shunt 770 and/or the second connector part 730A may be provided with stop means for limiting movement of the shunt 770 in the direction towards the active state so that it does not travel beyond the desired location when in the active state. For example, the shunt 770 and the connector part 730A may be provided with mutually engageable, e.g. transverse, surfaces 773, 775, which engage to hold the shunt 770 in the active state. Alternatively, a tie (not illustrated) may be connected between the shunt 770 and the second connector part 730A, or a surface on which it is mounted, to limit movement of the shunt 770.

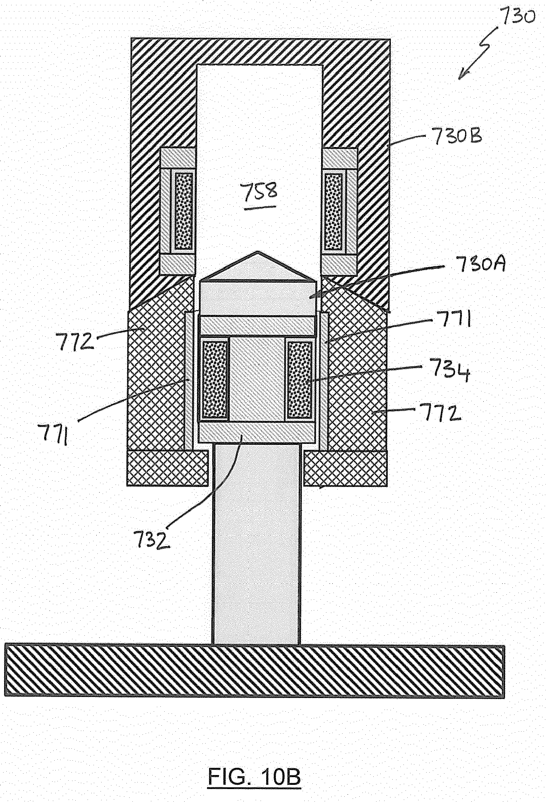

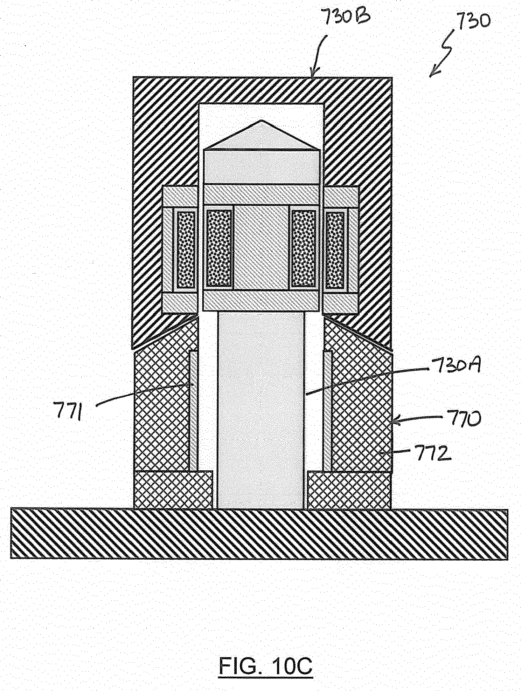

Figure 10A shows the shunt 770 in the active state with the second connector part 730B removed from the first connector part 730A. Figure 10B shows how the second connector part 730B engages with the shunt 770 as the first connector part 730A enters the socket 758, and Figure 10C shows how the second connector part 730B displaces the shunt 770 out of the active state (against the buoyancy of the shunt and/or any counteracting resilient bias, as applicable) in reaching its connected state. In this example, the longitudinal dimension of the shunt 770 is such that the shunt 770 engages with the base of the connector 730, or surface on which it is mounted, to limit the travel of the second connector part 730B so that it does not pass beyond the connected state.

The embodiments of Figures 9 and 10, when buoyant shunts 670, 770 are used, are particularly suited for use in applications where the connector is immersed in water (or other liquid) and the shunt-carrying connector part is static, e.g. installed on the sea bed, a GBS or other base, since the buoyancy of the shunt 670, 770 causes it to rise to adopt the active state when the two parts of the connector are disconnected.

Instead of buoyant shunts, connectors embodying the invention may have gravity operated shunts, i.e. a shunt that falls under the influence of gravity to adopt the active state when the two parts of the connector are disconnected. By way of example, Figures 11 and 12 show respective embodiments of a power connector 830, 930 provided with a gravity-operated magnetic shunt 870, 970. Unless otherwise indicated or apparent, the connectors 870, 970 are the same as the connectors 770, 670 respectively, and the same or similar description applies as would be apparent to a skilled person.

Referring first to Figure 11, the connector 830 is inverted with respect to the connector 770 of Figure 10 such that the second connector part 830B is the static part and the first connector part 830A is movable into and out of the socket 858. The magnetic shunt 870 is annular, being located around the first connector part 830A and axially movable into and out of its active state (which is shown in Figure 11). The body 872 of the shunt 870 is formed from one or more material that is more dense that water (or other medium, e.g. air, in which the connector 830 is intended to be used) such that, when the connector parts 830A, 830B are disconnected and the first connector part 830A is in its normal use orientation (i.e. with the leading end 842 downwards), the shunt 870 falls into the active state. As such, the body 872 may be said to be weighted. When the first connector part 830A is inserted into the second connector part 830B, the shunt 870 is pushed out of its active state engagement with the second connector part 830B and by relative movement between the first and second connector parts 830A, 830B.

Referring now to Figure 12, the connector 930 is inverted with respect to the connector 670 of Figure 9 such that the first connector part 930A is the static part and the second connector part 930B is movable onto and off the first part 930A. The magnetic shunt 970 is located in the socket 958 and axially movable along the socket into and out of its active state (which is shown in Figure 12). The body, or core, 972 of the shunt 970 is formed from one or more material that is more dense that water (or other medium, e.g. air, in which the connector 830 is intended to be used) such that, when the connector parts 930A, 930B are disconnected and the second connector part 930B is in its normal use orientation (i.e. with the socket mouth 960 downwards), the shunt 970 falls into the active state. As such, the body 972 may be said to be weighted. When the first connector part 930A is inserted into the second connector part 930B, the shunt 970 is pushed out of its active state engagement with the first connector part 930A and by relative movement between the first and second connector parts 930A, 930B.

Any suitable magnetic material, e.g. iron, nickel, cobalt or other material with high magnetic permeability may be used to form the magnetic parts of the shunt 670, 770, 870, 970.

In the foregoing examples, the shunts have been described and illustrated in the context of power connectors having only one set of first and second windings. It will be apparent however that one or more of the same or similar shunts may be provided in the same or similar manner in cases where the first and/or second connector parts have more than one first or second winding. For example, the shunt may be long enough to extend alongside all of the first or second windings of the relevant connector part when in the active state. Optionally, the magnetic component of the shunt may extend continuously along the shunt to align with all of the relevant first or second windings. Alternatively, the shunt may have separate longitudinally spaced apart magnetic components for each of the relevant first or second windings, each magnetic component aligning longitudinally with a respective winding in the active state.

In embodiments where the magnetic shunt is provided on the second connector part, it provides a further advantage of, in the active state, blocking the socket, which reduces the amount of fouling that may otherwise occur should the socket be empty. For example, in undersea applications, the socket may otherwise become clogged with sand, vegetation or barnacles. Similarly, the first connector part may become fouled if left exposed and so the shunt also has an anti-fouling function. To this end the body of the shunt is shaped dimensioned to fill and block the socket transversely. Accordingly, movable shunts may be provided as described herein that do not have magnetic components, i.e. non-magnetic movable components, to provide the anti-fouling function. As such the movable shunt may be described more generally as a movable cover that provides a covering function in the active state, and which also provides a magnetic shunt function in the active state if it includes a magnetic component. For example, each of the embodiments described with reference to Figures 9 to 12 may omit the magnetic component 671, 771, 871, 971 and so behave as a movable cover without performing the function of a magnetic shunt. In preferred embodiments, the cover (whether configured to act as a magnetic shunt or not) is operable into and out of its active state in response to disconnection and connection, respectively, of the first and second connector parts. Alternatively, the cover (whether configured to act as a magnetic shunt or not) may be operable into and out of its active state by any other means, e.g. using a mechanical or electromechanical device (not shown) or manually, for example by a diver or ROV.

In alternative embodiments, each of the first and second connector parts may be provided with a movable cover in any of the ways described above, each cover being either a magnetic shunt, or a non-magnetic cover as desired.

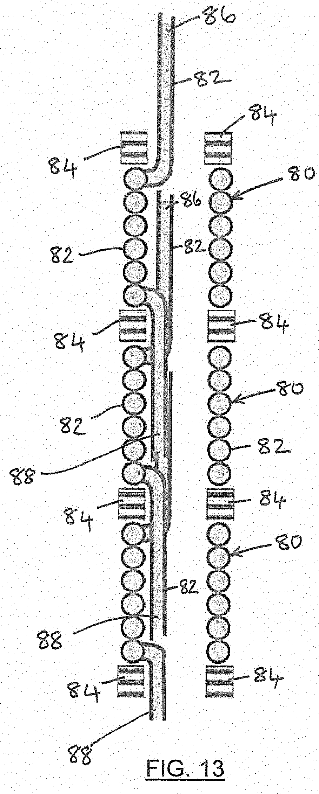

In any embodiments, the first and second windings may each comprise an electromagnetic coil comprising multiple turns of electrical conductor, typically wire. The conductor may be electrically insulated, e.g. with a coating or sheath. The windings may be embedded in electrically insulating resin or other suitable insulating material, as is illustrated for example in Figures 3 and 5 to 10. Figure 13 shows an alternative arrangement in which the windings are not embedded in resin, or the like. In this alternative, the conductor 80 forming the windings (which may be first windings on the first connector part or second windings on the second connector part) is insulated with a suitable layer 82 of insulation, e.g. a coating or sheath of any suitable insulating material, the insulation being sufficient that embedding is resin is not required. Figure 13 also shows a preferred arrangement of windings: each winding is separated by a magnetic core part 84; one end connection 86 of each winding is located at one longitudinal end of the winding (the top in this example), the winding being wound around the longitudinal axis so that the other end connection 88 is located at the other longitudinal end (the bottom in this example) of the winding. For three-phase embodiments, it is preferred to connect the windings to the voltage supply using a three phase star connection, i.e. resulting in a star-connected three-phase winding. In the illustrated example, the respective lower end connections 88 may be connected to the star point.

The arrangement of Figure 13 is particularly suitable for low voltage windings. The arrangement avoids joints in large diameter high current conductors and provides protection over the full length of conductor without discontinuities. When used in the first connector part a space is required in the centre of the connector part for routing the cable ends. The arrangement does not require a bobbin and therefore cooling is relatively good.

In preferred embodiments, the connector comprises a composite magnetic core, a first part of which is provided by the magnetic core of the first connector part, a second part of which is provided by the magnetic core of the second connector part. The first and second parts of the composite magnetic core are formed separately since they are part of separable connector parts, and in the connected state of the connector, there is a gap between the first and second parts of the composite magnetic core. Ideally, magnetic flux paths lie in radial planes, as can be seen for example from flux lines MF in Figure 4. However, conventional laminations cannot carry flux in a direction that is normal to the lamination surface.

Optionally, the composite magnetic core may be formed from ferrite, which can carry flux in any direction but supports relatively low flux density. Alternatively, the composite core may be formed from bundles of iron wire arranged to carry the flux along the wires and across the bundle, although this offers relatively poor effective permeability. Alternatively still, the composite magnetic core may be formed from a Soft Magnetic Composite (SMC) material (e.g. as provided by Hoganas AB), but SMC is relatively expensive and supports a lower flux density than electrical steel laminations.

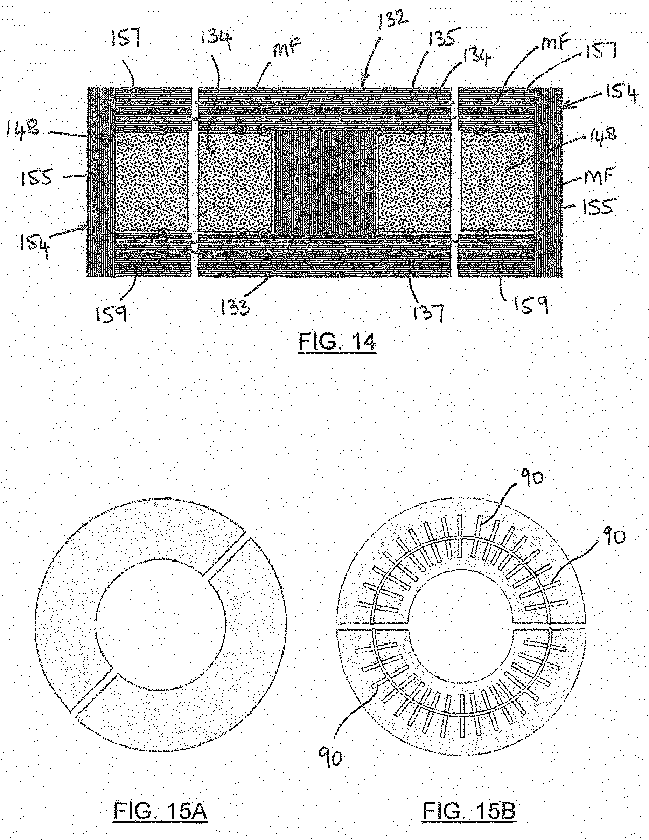

It is therefore preferred to use laminations, in particular steel laminations, to form the composite core of the connector. To achieve this, each part of the magnetic core should be constructed from one or more stacks of laminations that can carry magnetic flux in a direction that supports the radial flux lines MF illustrated in Figure 4 and also in Figure 14, and advantageously also magnetic flux in the axial direction.

Figure 14 shows a preferred composite magnetic core construction that is suitable for use in, for example, the embodiments of Figure 3, or 9 to 12. Using the same numerals as are used in Figure 3 for illustrative purposes, the composite magnetic core comprises a first part 132 and a second part 154 corresponding to the first and second connector parts. The central portion 133 of the first part 132 comprises at least one, and typically more than one, stack of plate laminations, which are typically rectangular, arranged such that the laminations extend in the longitudinal direction. Each of the end portions 135, 137 comprises a stack of ring laminations, which are typically circular, arranged such that the laminations extend in the transverse direction. The outer portion 155 of the second part 154 comprises at least one, and typically more than one, stack of plate laminations, which are typically rectangular, arranged such that the laminations extend in the longitudinal direction. Each of the end portions 157, 159 comprises a stack of ring laminations, which are typically circular, arranged such that the laminations extend in the transverse direction (and which are wider than the ring laminations of the end portions 135, 137 so that the latter can fit within the former).

The respective stacks of laminations may be fixed to each other by any suitable means, e.g. adhesive, in order to create the respective core parts 132, 154. In the typical case where the central portion 133 and outer portion 155 comprises more than one stack of laminations, the respective stacks are spaced apart around the periphery of the respective ring portions 135, 137 and 157, 159.

In any embodiment where ring laminations are used, it is preferred to provide each ring as two or more lamination segments separated by radially disposed cuts or gaps of non-conducting material. By way of example a two segment radially split ring lamination is illustrated in Figure 15A. The radially disposed cuts reduce or prevent tangential circulating currents. Preferably, the split-ring laminations are stacked such that the cuts in adjacent layers of the stack are not aligned with each other.

Current in any of the windings produces a magnetomotive force that drives leakage flux between the end portions of the relevant magnetic core. The leakage flux is small but passes normal to the end portion and so induces eddy currents and losses. With reference to Figure 15B, in any embodiment where ring laminations are used, eddy currents can be reduced by providing spaced apart, radially disposed flux shunts around the ring. The flux shunts 90 may be part of the ring and carry radial flux. The flux shunts 90 may be made of a material such as soft magnetic composite (SMC) that can tolerate flux in all directions. Alternatively, or in addition, the lamination rings at or close to the ends of the lamination stack may be slitted to present higher resistance to eddy currents.

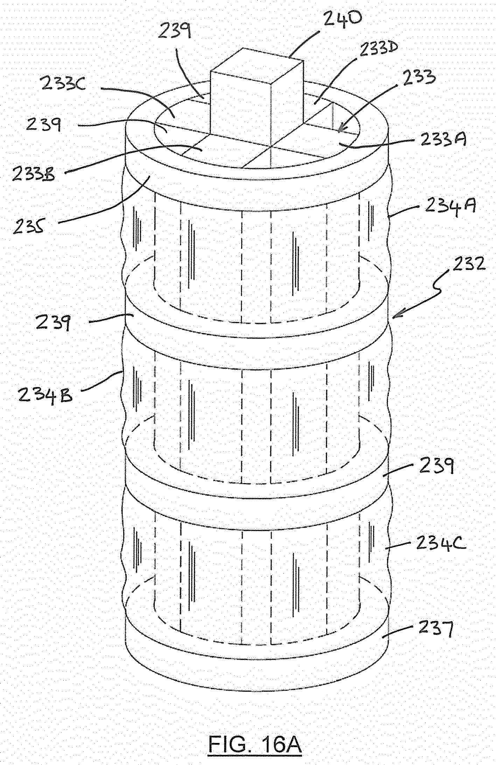

Referring now to Figures 16A to 16D, a preferred construction of the magnetic core of the first connector part is shown, being particularly suited for embodiments where the first connector part has more than one first winding, for example the embodiments of Figures 5 to 8. Using the same numerals as are used in Figure 5 for illustrative purposes, the central portion 233 comprises at least one, and typically at least two, posts 233A, 233B, 233C, 233D of magnetic material. Each post may be formed as a stack of plate laminations, which are typically rectangular, arranged such that the laminations extend in the longitudinal direction. Each of the end portions 235, 237, and the or each intermediate portion 239, comprises a magnetic ring. Each ring may be formed as a stack of ring laminations, which are typically circular, arranged such that the laminations extend in the transverse direction. The end portions 235, 237 and intermediate portion(s) 239 are aligned in the transverse direction to provide a hollow core 227. The central portion 233 is located within the hollow core 227. The rings 235, 237, 239 are spaced apart longitudinally, evenly spaced in this example, and may have the same thickness in the longitudinal direction. The rings 235, 237, 239 are typically of the same diameter to provide a hollow core 227 of uniform width.

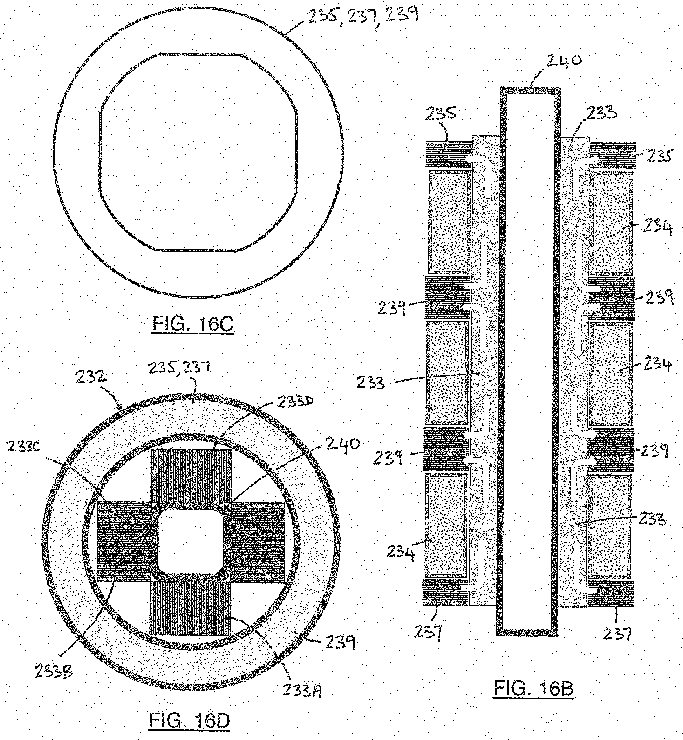

In the typical case where the central portion 233 comprises more than one magnetic post, each of which in this example is formed as a stack of laminations, the posts are spaced apart around the longitudinal axis of the connector part 230A, preferably symmetrically. Figure 16A and 16B illustrate a preferred embodiment in which the central portion 233 comprises four lamination stacks, or posts, spaced apart, preferably equally spaced apart, around the longitudinal axis of the connector part 230A. The lamination stacks may be fixed to a central support structure 240, which in this example is rectangular, preferably square, in transverse cross-section, and may be hollow. Preferably, the posts 233A, 233B, 233C, 233D are arranged in a cruciform manner. The first windings 234A, 234B, 234C are wound around the outside of the lamination stacks 233A, 233B, 233C, 233D that make up the central portion 233, and between the rings that provide the end and intermediate portions 235, 237, 239. Advantageously, the gaps 229 between adjacent stacks of the central portion 233 may be used to route the cables 231 for connecting the windings to an external circuit. In preferred embodiments, the core 232 is symmetrical about its longitudinal axis.

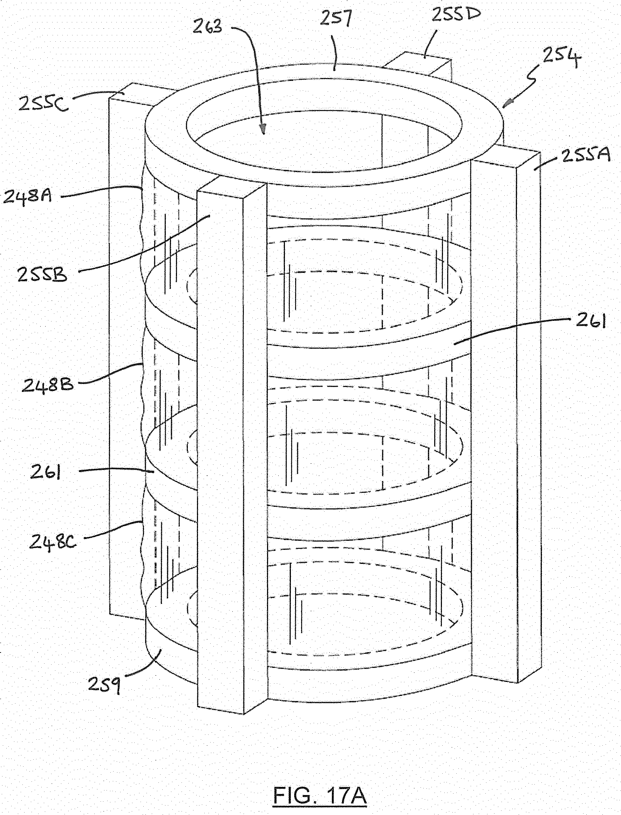

Referring now to Figures 17A to 17D, a preferred construction of the magnetic core of the second connector part is shown, being particularly suited for embodiments where the second connector part has more than one second winding, for example the embodiments of Figures 5 to 8. Using the same numerals as are used in Figure 5 for illustrative purposes, the outer portion 255 of the second core part 254 comprises at least one, and typically more than one, magnetic post 255A, 255B, 255C, 255D. Each post may be formed as a stack of plate laminations, which are typically rectangular, and arranged such that the laminations extend in the longitudinal direction. Each of the end portions 257, 259 and the or each intermediate portion 261 comprises a magnetic ring. Each ring may be formed as a stack of ring laminations, which are typically circular, arranged such that the laminations extend in the transverse direction. The end portions 257, 259 and intermediate portion(s) 261 are aligned in the transverse direction to provide a hollow core 263. The rings 257, 259, 261 are typically of the same diameter to provide a hollow core 263 of uniform width. The outer portion 255 is located outside the ring stacks of the intermediate and end portions 257, 259, 261. The rings that form the intermediate and end portions 257, 259, 261 are wider than the rings of the end portions and intermediate portion(s) 235, 237, 239 so that the latter can fit within the former.

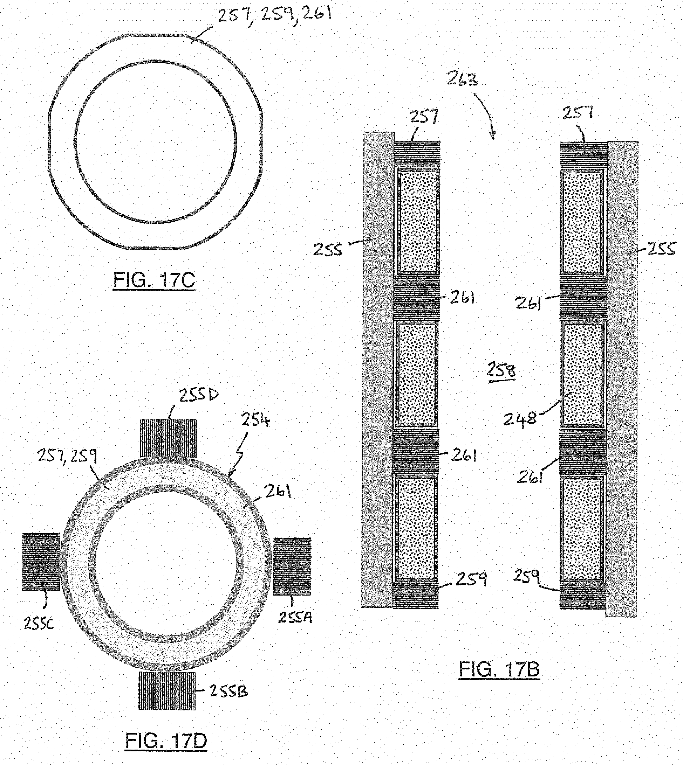

In the typical case where the outer portion 255 comprises more than one magnetic post 233A, 233B, 233C, 233D, the posts are spaced apart around the outside of the rings that form the intermediate and end portions 257, 259, 261, preferably symmetrically, or evenly spaced apart. Figures 17A and 17B illustrates a preferred embodiment in which the outer portion 255 comprises four lamination posts 233A, 233B, 233C, 233D spaced apart, preferably equally spaced apart, around the aligned intermediate and end portions 257, 259, 261. The second windings 248A, 248B, 248C are wound around the inside of the posts that make up the outer portion 255, and between the rings that make up the end and intermediate portions 257, 259, 261. Advantageously, the gaps between adjacent stacks of the outer portion 255 may be used to route the cables 252 for connecting the windings to an external circuit.

The respective stacks of laminations (posts or rings) may be fixed to each other or the support structure, as applicable, by any suitable means, e.g. adhesive, in order to create the desired configuration.

Advantageously, the respective orientations of the laminated stacks allows both axial and toroidal magnetic flux paths. In alternative embodiments the outer portion 255 and/or central portion 233 may comprise a solid body, e.g. a cylindrical body, rather than being formed from multiple lamination stacks/posts.

More generally it will be understood that the magnetic cores for the first and second connector parts, including the exemplary cores of Figures 16 and 17, may be formed from any suitable magnetic material (e.g. SMC), not necessarily laminations.

Advantageously, all of the inductive connectors are arranged in use so that the first and second connector parts can be connected and disconnected by relative movement between the parts in a vertical direction. To this end, one or other of the connector parts is arranged in use (e.g. positioned on the seabed, or on a GBS or other surface) such that its longitudinal axis is substantially vertically oriented. This arrangement facilitates the connection and disconnection of the parts using a crane or other machine.

Various embodiments of the invention have been described herein whereby some features are shown in one or more embodiments but not in others. Any such features may equally be provided in the other embodiments as would be apparent to a skilled person.

The invention is not limited to the embodiment(s) described herein but can be amended or modified without departing from the scope of the present invention.

## Claims

1. An inductive power connector comprising:
a first connector part comprising a magnetic core, and at least one first electrical winding wound around a longitudinal axis of the magnetic core;
a second connector part comprising a magnetic core, at least one second electrical winding, the second connector part being shaped and dimensioned to provide a socket for receiving said first connector part, said at least one second electrical winding being wound around a longitudinal axis of said socket;
wherein said first connector part is removably insertable in said second connector part,
and wherein, in a connected state in which said first connector part is inserted in said second connector part, said magnetic core and said at least one first electrical winding of said first connector part are located in said socket and within said at least one second electrical winding to allow inductive electromagnetic coupling between said at least one first electrical winding and said at least one second electrical winding,
and wherein, in said connected state, said longitudinal axes are substantially coincident.

2. The connector of claim 1, wherein said at least one first winding comprises two or more first windings, the first windings being mutually spaced apart along the longitudinal axis of the magnetic core, and wherein the first windings are preferably coaxial with each other.

3. The connector of claim 1 or 2, wherein said at least one second winding comprises two or more second windings, each second winding being spaced apart along the longitudinal axial of the socket, and wherein the second windings are preferably coaxial with each other.

4. The connector of claim 2 or 3, wherein each of said first windings is separated from the, or each, adjacent of said first windings by part of said magnetic core of the first connector part, and/or each of said second windings is separated from the, or each, adjacent of said second windings by part of said magnetic core of the second connector part.

5. The connector of any preceding claim, wherein said second connector part includes an annular magnetic core having a longitudinal axis that is substantially coincident with the longitudinal axis of the socket, said at least one second electrical winding being provided on said annular magnetic core, and wherein, in said connected state, said magnetic core and said at least one first electrical winding of said first connector part are located within the annular magnetic core of the second connector part.

6. The connector of any preceding claim, wherein said at least one first winding and said at least one second winding are configured to cause said connector to act as a power transformer.

7. The connector of any preceding claim, wherein said at least one first winding is located around the outside of the magnetic core of the first connector part, said at least one first winding preferably being located in a respective recessed seat provided in the outside of said magnetic core, the, or each recessed seat accommodating one or more first winding.

8. The connector of any preceding claim, wherein said at least one second winding is located around the inside of the magnetic core of the second connector part, said at least one second winding preferably being located in a respective recessed seat provided in the inside of said magnetic core, the, or each recessed seat accommodating one or more second winding.

9. The connector of any preceding claim, wherein, in said connected state, the magnetic core of said first connector part and the magnetic core of said second connector part together form a composite magnetic core around said at least one first and second windings.

10. The connector of any preceding claim, wherein the first connector part and the second connector part have an equal number of recessed seats for receiving first and second windings respectively, and wherein in the connected state the, or each, recessed seat of the first connector part is longitudinally aligned with a corresponding recessed seat of the second connector part.

11. The connector of any preceding claim, wherein the magnetic core of said first connector part includes first and second longitudinally spaced apart end portions between which said at least one first winding is located, and the magnetic core of said second connector part includes first and second longitudinally spaced apart end portions between which said at least one second winding is located, and wherein said end portions of said first connector part are aligned with the end portions of the second connector part in the longitudinal direction when the connector is in the connected state, and/or wherein the magnetic core of said first connector part includes at least one intermediate portion located between adjacent first windings, and the magnetic core of said second connector part includes at least one intermediate portion located between adjacent second windings, and wherein the or each intermediate portion of said first connector part is aligned with a respective intermediate portions of the second connector part in the longitudinal direction when the connector is in the connected state.

12. The connector of any preceding claim wherein the magnetic cores of said first and second connector parts comprise a plurality of longitudinally spaced apart rings of magnetic material between which the respective first and second windings are located, wherein, in the connected state, the rings of the first connector part are preferably aligned with the rings of the second connector part in the longitudinal direction.

13. The connector of any preceding claim, wherein the magnetic core of said first connector part comprises a plurality of longitudinally spaced apart and transversely disposed rings of magnetic material, located around a longitudinally disposed central core portion, and wherein said central core portion optionally comprises at least one longitudinally disposed post of magnetic material.

14. The connector of any preceding claim, wherein the magnetic core of said second connector part comprises a plurality of longitudinally spaced apart and transversely disposed rings of magnetic material, located within a longitudinally disposed outer core portion, and wherein said outer core portion optionally comprises a plurality of longitudinally disposed post of magnetic material, spaced apart, preferably symmetrically, about the longitudinal axis of the magnetic core.

15. The connector of any preceding claim, wherein said first and second connector parts are rotatable relative to one another about a common longitudinal axis in the connected state, and wherein, preferably, one or more sets of bearings are provided on the first and second connector parts to facilitate the relative rotation between the first and second connector parts.
